# EUROPEAN PATENT APPLICATION

(11) **EP 4 407 886 A1**
(43) Date of publication of application: **31.07.2024**
(21) Application number: 22893324.8
(22) Date of filing: 15.11.2022
(51) Int. Cl.: H04B 7/06, H04B 7/0417, H04B 7/0408, H04B 7/155, H04L 5/00

(54) **APPARATUS AND METHOD FOR BEAMFORMING IN WIRELESS COMMUNICATION SYSTEM**

(30) Priority: 15.11.2021 KR 20210156731
(71) Applicant: Samsung Electronics Co., Ltd., Suwon-si, Gyeonggi-do 16677 (KR)
(72) Inventor: CHOI, Dongwook, Suwon-si Gyeonggi-do 16677 (KR); KANG, Jeewoong, Suwon-si Gyeonggi-do 16677 (KR); KIM, Eunyong, Suwon-si Gyeonggi-do 16677 (KR); YU, Hyunkyu, Suwon-si Gyeonggi-do 16677 (KR); JANG, Chulhee, Suwon-si Gyeonggi-do 16677 (KR)
(74) Representative: Gulde & Partner
(86) International application number: PCT/KR2022/017996
(87) International publication number: WO 2023/085905

(57) **Abstract**

The present disclosure relates to a 5th generation (5G) or pre-5G communication system for supporting a higher data transmission rate than a 4th generation (4G) communication system such as Long-Term Evolution (LTE). According to various embodiments of the present disclosure, an operating method of a repeater device, in a wireless communication system, comprises the steps of: receiving, from a base station, control information including configuration information indicating a repeater index list; receiving a downlink signal from the base station; identifying whether an index of the received downlink signal is included in the repeater index list; if the index of the received downlink signal is included in the repeater index list, then amplifying the downlink signal and transmitting a repeater beamforming signal generated through a process of applying a beamforming weight to the amplified downlink signal; and if the index of the received base station signal is not included in the repeater index list, then amplifying the downlink signal and transmitting the amplified downlink signal.

## Description

### [Technical Field]

The disclosure generally relates to a wireless communication system, and more particularly, to an apparatus and a method for beamforming in a wireless communication system.

### [Background Art]

Efforts to develop enhanced 5^{th} generation (5G) communication systems or pre-5G communication systems have been ongoing in order to meet the increasing demand for wireless data traffic since 4^{th} generation (4G) communication systems were commercialized. For this reason, 5G communication systems or pre-5G communication systems are called Beyond 4G network communication systems or post long term evolution (LTE) systems.

A 5G communication system is considered to be implemented in a superhigh frequency (mmWave) band (for example, 28 GHz or 60 GHz band) to achieve a high data transmission rate. For 5G communication systems, technologies for beamforming, massive multiple-input multiple-output (MIMO), full dimensional MIMO (FD-MIMO), array antenna, analog beamforming, and large scale antenna are being discussed to mitigate a path loss of radio waves and to increase a transmission distance of radio waves in a superhigh frequency band.

In addition, technologies for evolved small cells, advanced small cells, cloud ratio access network (RAN), ultra-dense network, device to device communication (D2D), wireless backhaul, moving network, cooperative communication, coordinated multi-points (CoMP), and interference cancellation in 5G communication systems are developing to enhance networks of systems.

In addition, hybrid frequency shift keying and quadrature amplitude modulation (FQAM) and sliding window superposition coding (SWSC), which are advanced coding modulation (ACM) schemes, and filter bank multi carrier (FBMC), non-orthogonal multiple access (NOMA), and sparse code multiple access (SCMA) which are enhanced accessing technology in 5G systems are developing.

A repeater device refers to an electronic device that increases an arrival distance of a signal by amplifying a received signal. In a wireless communication system, a repeater device may receive a downlink signal from a base station and may amplify the received downlink signal, thereby enhancing a coverage of the base station. There is a demand for a method for managing a repeater device more effectively in order to reduce interference with neighboring cells in an increasing frequency band and to enhance a transmission coverage.

### [Disclosure of Invention]

### [Technical Problem]

Based on the above-described discussion, the disclosure provides an apparatus and a method for performing beamforming transmission based on control information of a base station in a wireless communication system.

In addition, the disclosure provides an apparatus and a method for identifying whether an index of a downlink signal transmitted by a base station in a wireless communication system is included in a repeater index list.

In addition, the disclosure relates to an apparatus and a method for a base station that transmits control information to a repeater device for the sake of beamforming transmission of the repeater device in a wireless communication system.

In addition, the disclosure relates to an apparatus and a method for a base station to receive a feedback signal generated based on beam sweeping via a repeater in a wireless communication system.

### [Solution to Problem]

According to embodiments of the disclosure, there is provided a method performed by a repeater device in a wireless communication system, the method including: a process of receiving, from a base station, control information including configuration information indicating a repeater index list; a process of receiving a downlink signal from the base station; a process of identifying whether an index of the received downlink signal is included in the repeater index list; a process of, when the index of the received downlink signal is included in the repeater index list, amplifying the downlink signal, and transmitting a repeater beamforming signal which is generated through a process of applying a beamforming weight to the amplified downlink signal; and a process of, when the index of the received downlink signal is not included in the repeater index list, amplifying the downlink signal and transmitting the amplified downlink signal.

According to various embodiments of the disclosure, there is provided a method performed by a base station in a wireless communication system, the method including: a process of transmitting, to a repeater device, control information including configuration information indicating a repeater index list; a process of generating a downlink signal based on a feedback signal received from a terminal; a process of identifying whether an index of the received feedback signal is included in the repeater index list; a process of, when the index of the received feedback signal is included in the repeater index list, transmitting the downlink signal to the repeater device; and a process of, when the index of the received feedback signal is not included in the repeater index list, transmitting a base station beamforming signal that is generated through a process of applying a beamforming weight to the downlink signal.

According to various embodiments, there is provided a repeater device in a wireless communication system, the repeater device including a controller which is configured to: receive, from a base station, control information including configuration information indicating a repeater index list; receive a downlink signal from the base station; identify whether an index of the received downlink signal is included in the repeater index list; when the index of the received downlink signal is included in the repeater index list, amplify the downlink signal, and transmit a repeater beamforming signal which is generated through a process of applying a beamforming weight to the amplified downlink signal; and, when the index of the received downlink signal is not included in the repeater index list, amplify the downlink signal and transmit the amplified downlink signal.

According to various embodiments of the disclosure, there is provided a base station device in a wireless communication system, the base station device including a controller which is configured to: transmit, to a repeater device, control information including configuration information indicating a repeater index list; generate a downlink signal based on a feedback signal received from a terminal; identify whether an index of the received feedback signal is included in the repeater index list; when the index of the received feedback signal is included in the repeater index list, transmit the downlink signal to the repeater device; and when the index of the received feedback signal is not included in the repeater index list, transmit a base station beamforming signal that is generated through a process of applying a beamforming weight to the downlink signal.

### [Advantageous Effects of Invention]

According to the apparatus and the method according to embodiments of the disclosure, a repeater device may perform beamforming transmission based on beam information of a base station, thereby reducing interference with neighboring cells.

According to the apparatus and the method according to embodiments of the disclosure, a repeater device may perform beamforming transmission based on beam information of a base station, thereby enhancing a transmission coverage.

The effects achieved by the disclosure are not limited to those mentioned above, and other effects that are not mentioned above may be clearly understood to those skilled in the art based on the description provided below.

### [Brief Description of Drawings]

FIGS. 1A and 1B illustrate an example of a wireless communication environment according to embodiments of the disclosure;
FIG. 2A illustrates a functional configuration of a repeater device for signal amplification according to embodiments of the disclosure;
FIGS. 2B to 2D illustrate examples of a communication unit of the repeater device for beamforming according to embodiments of the disclosure;
FIG. 3 illustrates an example of addition of a synchronization signal block (SSB) index for a repeater device according to embodiments of the disclosure;
FIG. 4 illustrates an example of signaling between a base station and a repeater device according to embodiments of the disclosure;
FIG. 5 illustrates a functional configuration of a repeater device for signal amplification based on beam information of a base station according to embodiments of the disclosure;
FIG. 6 illustrates an operation flow of a repeater device for amplifying based on beam information according to embodiments of the disclosure;
FIG. 7 illustrates a functional configuration of a base station according to embodiments of the disclosure;
FIG. 8 illustrates an operation flow of a base station for amplifying based on beam information of a repeater device according to embodiments of the disclosure; and
FIG. 9 illustrates an example of resource allocation for amplifying based on beam information according to embodiments of the disclosure.

### [Best Mode for Carrying out the Invention]

According to embodiments of the disclosure, there is provided a method performed by a repeater device in a wireless communication system, the method including: a process of receiving, from a base station, control information including configuration information indicating a repeater index list; a process of receiving a downlink signal from the base station; a process of identifying whether an index of the received downlink signal is included in the repeater index list; a process of, when the index of the received downlink signal is included in the repeater index list, amplifying the downlink signal, and transmitting a repeater beamforming signal which is generated through a process of applying a beamforming weight to the amplified downlink signal; and a process of, when the index of the received downlink signal is not included in the repeater index list, amplifying the downlink signal and transmitting the amplified downlink signal.

### [Mode for Carrying out the Invention]

Terms used in the disclosure are used to describe specified embodiments and are not intended to limit the scope of other embodiments. The terms of a singular form may include plural forms unless otherwise specified. All of the terms used herein, which include technical or scientific terms, may have the same meanings that are generally understood by a person skilled in the art. It will be further understood that terms, which are defined in a dictionary, may be interpreted as having the same or similar meanings as or to contextual meanings of the relevant technology and not in an idealized or overly formal way, unless expressly so defined herein in the disclosure. In some cases, even if the terms are terms which are defined in the specification, they should not be interpreted as excluding embodiments of the present disclosure.

In various embodiments of the disclosure described below, hardware-wise approach methods will be described by way of an example. However, various embodiments of the disclosure include technology using both hardware and software, and thus do not exclude software-based approach methods.

Hereinafter, preferred embodiments of the disclosure will be described in detail with reference to the accompanying drawings. It should be noted that the same components are indicated by the same reference numerals in the accompanying drawings. In addition, detailed descriptions of well-known functions and configurations will be omitted since they would unnecessarily obscure the subject matters of the disclosure.

In explaining embodiments, descriptions of technology contents that are well known in the technical field to which the disclosure belongs, and are not directly related to the disclosure will be omitted. This is to convey the subject matters of the disclosure more clearly without obscuring, by omitting redundant explanations.

For the same reasons, some components in the accompanying drawings may be exaggerated, omitted, or schematically illustrated. In addition, the size of each component does not completely reflect a real size. The same reference numerals are used for the same or corresponding components in each drawing.

The advantages and features of the disclosure, and methods for achieving the same will be apparent by referring to embodiments, which will be described below in detail along with the accompanying drawings. However, the disclosure is not limited to embodiments disclosed hereinbelow, and may be embodied in many different forms. Embodiments disclosed hereinbelow are provided only to make the disclosure thorough and complete and fully convey the scope of the disclosure to those of ordinary skill in the art, and the disclosure may be defined only by the scope of the appended claims. Throughout the specification, the same reference numerals indicate the same components.

It will be understood that each block in the drawing showing process flowcharts and combinations of the process flowcharts may be performed by computer program instructions. The computer program instructions may be loaded into a processor of a generic-purpose computer, a special computer, or other programmable data processing equipment. Therefore, the instructions performed by the processor of the computer or other programmable data processing equipment may generate a means for performing functions explained in the block(s) of the flowcharts. The computer program instructions may be stored in a computer-usable or computer-readable memory which is directed at a computer or other programmable data processing equipment in order to implement a function in a specific method. Accordingly, the instructions stored in the computer-usable or computer-readable memory may produce a manufacturing item including an instruction means for performing functions explained in the block(s) of the flowcharts. The computer program instructions may be loaded on a computer or other programmable data processing equipment. Accordingly, a series of operation steps may be performed on the computer or other programmable data processing equipment to generate a process to be executed by the computer, and the instructions performing the computer or other programmable data processing equipment may provide steps for executing functions explained in the block(s) of the flowcharts.

In addition, each block may indicate a part of a module, a segment or a code including one or more executable instructions for executing a specified logical function(s). It should be noted that, in some alternative examples, functions mentioned in blocks may be performed irrespective of an order. For example, two blocks which are successively illustrated may be performed substantially at the same time, or may be performed in the inverse order according to their corresponding functions.

The term "unit" used in the present embodiments refers to a software component or a hardware component such as a field programmable gate array (FPGA) or an application specific integrated circuit (ASIC), and the "unit" performs a certain role. However, the "unit" is not limited to software or hardware, The "unit" may be configured to exist in a storage medium which may address, and may be configured to reproduce one or more processors. For example, the "unit" may include components such as software components, object-oriented software components, class components and task components, and processes, functions, attributes, procedures, sub-routines, segments of a program code, drivers, firmware, microcode, circuit, data, database, data structures, tables, arrays, and variables. Functions provided in the components and the "units" may be coupled with fewer components and "units" or may further be divided into additional components and "units." In addition, the components and the "units" may be implemented to reproduce one or more central processing units (CPUs) in a device or a security multimedia card.

The disclosure described hereinbelow relates to an apparatus and a method of a repeater for performing beamforming transmission based on control information of a base station in a wireless communication system. Specifically, the disclosure describes a technology for increasing a transmission coverage of a base station by a repeater device amplifying a signal based on a beam index according to a position of a terminal.

As used in explanations of the above-described technology, terms indicating types of signals (for example, control information, beam information, a control signal, a data signal, a control channel, a data channel a synchronization signal, a synchronization block, system information), terms indicating network entities (for example, a repeater device, a base station, a terminal), terms related to time resources (for example, a symbol, a slot, a sub frame, a radio frame), terms related to frequency resources (for example, a resource element (RE), a resource block (RB), a bandwidth part (BWP), a band width (BW), a carrier), terms related to signals (for example, a RS, a symbol, information), terms related to signal processing (for example, encoding/decoding, channel coding, scrambling, modulation, IFFT/FFT, cyclic prefix (CP) insertion/deletion), terms indicting components of a device (for example, a communication unit, a RF unit, a beamforming unit) are merely examples for convenience of explanation. Accordingly, the disclosure is not limited to the terms described below, and other terms having the same technical meanings may be used.

In addition, various embodiments will be described by using terms used in some communication standards (for example, 3^{rd} generation partnership project (3GPP)), but these are merely an example for explanation. Various embodiments of the disclosure may be easily modified and applied to other communication systems.

Technologies described hereinbelow may be used in various radio access systems such as code division multiple access (CDMA), frequency division multiple access (FDMA), time division multiple access (TDMA), orthogonal frequency division multiple access (OFDMA), single carrier frequency division multiple access (SC-FDMA), or the like. CDMA may be implemented by radio technology such as universal terrestrial radio access (UTRA) or CDMA2000. TDMA may be implemented by radio technology such as global system for mobile communications (GSM), general packet radio service (GPRS) or enhanced data rates for GSM evolution (EDGE). OFDMA may be implemented by radio technology such as IEEE 802.11 (that is, Wi-Fi), IEEE 802.16 (that is, WiMAX), IEEE 802-20, evolved UTRA (E-UTRA). Hereinafter, 3GPP NR will be mainly described for the sake of clear explanation of the disclosure, but the technical concept of the disclosure is not limited thereto.

Beyond the initial function of providing a voice-oriented service, wireless communication systems are developing into broadband wireless communication systems which provide a packet data service of high-speed, high quality like communication standards, such as high speed packet access (HSPA) of 3GPP, long term evolution (LTE) or evolved universal terrestrial radio access (E-UTRA), LTE-Advanced (LTE-A), LTE-Pro, high rate packet data of 3GPP2, ultra mobile broadband (UWB), and 802.16e of IEEE.

In an LTE system, which is a representative example of the above-described broadband wireless communication system, an orthogonal frequency division multiplexing (OFDM) scheme may be employed in downlink (DL), and a single carrier-frequency division multiple access (SC-FDMA) scheme may be employed in uplink (UL). The uplink refers to a wireless link through which a terminal (user equipment (UE) or a mobile station (MS)) transmits data or a control signal to a base station (eNode B or a base station (BS)), and the downlink refers to a wireless link through which a base station 110 transmits data or a control signal to a terminal 130. In addition, the downlink may refer to transmission via a repeater device 120 between the base station 110 and the terminal 130. The above-described multiple access schemes may assign or manage time-frequency resources for carrying and transmitting data or control information for each user not to overlap one another, that is, to establish orthogonality, and thereby distinguish data or control information of each user.

A 5G (or NR) communication system which is a post-LTE communication system should support a service satisfying various requirements simultaneously so as to freely reflect various requirements of a user and a service provider. Services which are considered for the 5G communication system may include enhanced mobile broadband (eMBB), massive machine type communication (mMTC), ultra-reliability low latency communication (URLLC).

eMBB aims at providing a high data transmission speed which is more enhanced in comparison to a data transmission speed supported by existing LTE, LTE-A, or LTE-Pro. For example, in a 5G communication system, eMBB should be able to provide a peak data rate of 20 Gbps in downlink and to provide a peak data rate of 10 Gbps in uplink from the point of view of one base station. In addition, the 5G communication system should provide an increased user perceived data rate of a terminal, while providing the peak data rate. In order to meet the requirements described above, there may be a request for enhancement of various transmission and reception technologies including an enhanced multi input multi output (MIMO) transmission technology. In an LTE system, signals are transmitted by using a maximum transmission bandwidth of 20 MHz in a 20 GHz band. On the other hand, in a 5G communication system, a frequency bandwidth larger than 20 MHz is used in a frequency band of 3-6 GHz or 6 GHz or more, so that a data transmission rate required in the 5G communication system may be satisfied.

At the same time, mMTC is considered to support an application service such as Internet of thing (IoT) in the 5G communication system. mMTC may require support of access by massive terminals within a cell, enhanced coverage of a terminal, an increased battery time, reduction in a cost of a terminal in order to provide IoT efficiently. Since IoT is attached to various sensors and various devices to provide a communication function, IoT should be able to support many terminals (for example, 1,000,000 terminals/km2) within a cell. In addition, since terminals supporting mMTC are likely to be positioned in a shaded area that is not covered by a cell, such as a basement of a building, due to characteristics of a service, the service of mMTC may require a broader coverage compared to other services provided by the 5G communication system. Since terminals supporting mMTC should be configured with low-priced terminals, and there may be difficulty in replacing a battery of a terminal frequently, there may be a need for a long battery life time, for example, a battery life of 10-15 years.

Lastly, URLLC is a cellular-based wireless communication service which is used for a specific purpose (mission-critical). For example, services used for remote control of a robot or a machinery, industrial automation, an unmanned aerial vehicle, remote health care, an emergency alert may be considered. Accordingly, communication provided by URLLC should provide very low latency and very high reliability. For example, services supporting URLLC should satisfy air interface latency shorter than 0.5 millisecond, and simultaneously, should satisfy requirements of a packet error rate of 10⁻⁵ or less. Accordingly, the 5G system should provide a shorter transmit time interval (TTI) than other services in order to provide a service supporting URLLC, and simultaneously, may need to meet design requirements to allocate broad resources in a frequency band in order to guarantee reliability of a communication link.

The three services considered in the 5G communication system, that is, eMBB, URLLC, mMTC, may be multiplexed in one system and may be transmitted. In this case, in order to satisfy different requirements of respective services, different transceiving techniques and transceiving parameters may be used between services.

As used herein, a term for identifying an access node, terms indicating network entities, terms indicating messages, a term indicating an interface between network objects, terms indicating a variety of identification information are merely examples for the convenience of explanation. Accordingly, the disclosure is not limited to terms described below, and other terms indicating objects having the same technical meanings may be used.

In the disclosure, terms and names defined in LTE and NAR standards, which are most recent standards defined in the 3^{rd} generation partnership project (3GPP) group among existing communication standards are used for the convenience of explanation. However, the disclosure is not limited by the terms and the names, and may be equally applied to systems conforming to other standards. In particular, the disclosure may be applied to 3GPP NR (5^{th} generation mobile communication standards).

In addition, in the disclosure, the expression "exceeding" or "being less than" may be used to determine whether a specific condition is satisfied, fulfilled, but these are just for expressing one example and do not exclude the expression "being greater than or equal to" or "being less than or equal to". The condition described by "being greater than or equal to" may be substituted with "exceeding", the condition described by "being less than or equal to" may be substituted with "being less than", and the condition described by "being greater than or equal to and less than" may be substituted with "exceeding and less than or equal to".

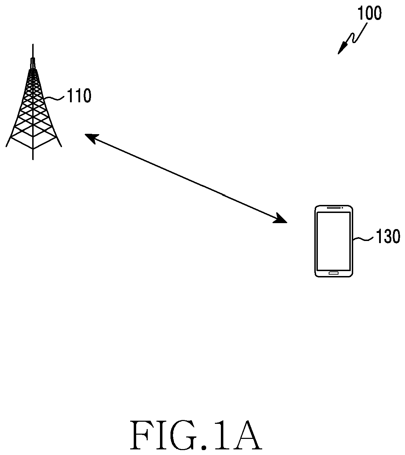

FIG. 1A illustrates an example of a wireless communication environment according to various embodiments of the disclosure. Referring to FIG. 1A, a base station 110 and a terminal 130 are illustrated as part of nodes using a wireless channel in a wireless communication system. The terminal 130 may be connected with a plurality of base stations. Although not shown in FIG. 1A, base stations may be connected with the terminal 130 through multiple connectivity (for example, dual connectivity (DC)).

The base station 110 may be a network infrastructure that provides radio access to the terminal 130. The base station 110 may have a coverage that is defined as a predetermined geographical region based on a distance by which it transmits a signal. The term 'coverage' used hereinbelow may indicate a service coverage area of the base station 110. The base station 110 may cover one cell or may cover multiple cells. Herein, the multiple cells may be distinguished by a supported frequency, an area of a covered sector.

The base station 110 may be referred to as "access point (AP)," "eNodeB, (eNB)," "5^{th} generation (5G) node," "5G NodeB," "next generation node B (gNB)," "wireless point," "transmission/reception point (TRP)," "distributed unit (DU)," "radio unit (RU)," "remote radio head (RRH)," or other terms having the same technical meaning as the above-mentioned terms, in addition to the base station. According to various embodiments, the base station 110 may be connected with one or more "transmission/reception points (TRP)." The base station 110 may transmit a downlink signal to the terminal 130 or may receive an uplink signal through the one or more TRPs.

The terminal 130 is a device that is used by a user, and may perform communication with the base station 110 through a wireless channel. In some cases, the terminal 130 may be operated without user's intervention. That is, at least one of the terminals 130 may be a device which performs machine type communication (MTC), and may not be carried by a user. The terminal 130 may be referred to as "user equipment (UE)," "mobile station," "subscriber station," "customer premises equipment (CPE)," "remote terminal," "wireless terminal," "electronic device," "terminal for vehicles," "user device", or other terms having the same technical meaning as the above-mentioned terms, in addition to the terminal.

A carrier aggregation (CA) technology was introduced in 3GPP standard release 10. CA is a technology whereby a terminal is connected to a homogeneous wireless communication cell group having a common radio resource control entity, and uses frequency resources on component carriers of cells positioned in different frequency bands, simultaneously, in transmitting and receiving signals, thereby improving frequency usage efficiency of a terminal and a base station. A dual connectivity (DC) technology, which is a kind of multiple connectivity, was introduced from 3^{rd} generation partnership project (3GPP) standard release 12. Dual connectivity is a technology whereby a terminal is connected with two independent heterogeneous or homogeneous wireless communication cell groups having a separate radio resource control entity, simultaneously, and uses frequency resources on component carriers of cells in cell groups positioned in different frequency bands in transmitting and receiving signals, thereby improving frequency usage efficiency of a terminal and a base station. Dual connectivity may include a master cell group in which a control plane is directly connected to a core network to manage a radio resource control state of a terminal, and a secondary cell group which is associated with the master cell group.

Due to the technical advantage of increasing efficiency in using restricted wireless communication resources of a terminal and wireless communication resources of a base station, researches on the dual connectivity technology and the carrier aggregation technology are actively performed from an academic perspective. In particular, since a 5G mobile communication system is basically operated in a non-stand alone mode to operate in association with a 4G core network, the dual connectivity and the carrier aggregation are used as a core technology in commercial services supporting 5G mobile communication systems.

Communication nodes (for example, a terminal, a base station, an entity of a corer network) according to various embodiments of the disclosure may operate in a NR system. In addition, communication nodes (for example, a terminal, a base station, an entity of a core network) according to various embodiments of the disclosure may operate all together in an LTE system.

In a 5G system, when the base station 110 transceives data with the terminal 130, a coverage may be restricted due to attenuation of a propagation path according to an increasing frequency band (for example, 6 GHz or higher band, particularly, an mmWave band). The problem caused by restriction of the coverage may be solved by densely arranging a plurality of relays (or relay nodes) between propagation paths of the base station 110 and the terminal 130. However, a problem of a cost for installing optical cables for backhaul connection between relays may arise. Accordingly, instead of installing the optical cables between relays, radio frequency resources of a broad band available in mmWave may be used to transceive backhaul data between relays, so that the problem of a cost for installing optical cables can be solved and an mmWave band can be more effectively used.

A repeater in a wireless communication system may be typically classified into an integrated access backhaul (IAB) node and a repeater device.

In the case of the IAB node, a base station may transmit a control/user-plane (C/U) signal to the IAB node by using a downlink. The IAB node may decode the signal received from the base station and may schedule and encode the signal, and may transmit the same to a target terminal. As described above, the technology for transmitting and receiving backhaul data from a base station and finally transmitting and receiving access data to the terminal through at least one relaying node is referred to as integrated access and backhaul (IAB). In this case, a relaying node for transmitting and receiving data from a base station by using a wireless backhaul is referred to as an IAB node. In this case, the base station (referred to as a gNB, an IAB donor) may be comprised of a central unit (CU) and a distributed unit (DU), and the IAB node may be comprised of a distributed unit (DU) and a mobile termination (MT). The CU controls DUs of all IAB nodes connected with the base station by multiple hops.

In the case of the repeater device, a base station may transmit a downlink signal to the repeater device. The repeater device may simply amplify the downlink signal received from the base station, and may transmit the signal to a target terminal. The repeater device may transmit signals without a problem of a relay delay compared to the IAB. The repeater device 120 may be used to relay a RF signal between the base station 110 and the wireless terminal 130, and to expand a service area or to cover a shaded area.

However, the IAB and the repeater device described above may have the following problems. The IAB may be comprised of an IAB-DU in which a repeater (IAB-node) serves as a base station, and an IAB-MT which serves as a terminal. The IAB may decode a received signal and may schedule and encode the signal, and then, may transmit the signal (that is, decode-and-forward), rather than simply amplifying and transmitting a received downlink signal (that is, amplify-and-forward). Accordingly, a downlink transmission process using IAB may cause a relay delay. An IAB device may have a complicated structure, and accordingly, may incur a relatively high cost in generating and installing, compared to a repeater device.

The repeater device may be relatively low priced and may reduce a relay delay compared to the IAB device. However, unlike an entity using beamforming, the repeater device uses simple beams and its coverage, which may be referred to as a service area, may be short compared to the IAB. In addition, since the repeater device does not use time division duplex (TDD) configuration information, slot overlapping of uplink and downlink signals may occur. Overlapping of slots may cause interference between neighboring cells. To solve such problems, embodiments of the disclosure propose an apparatus and a method for enhancing a coverage of a repeater device and reducing inter-cell interference.

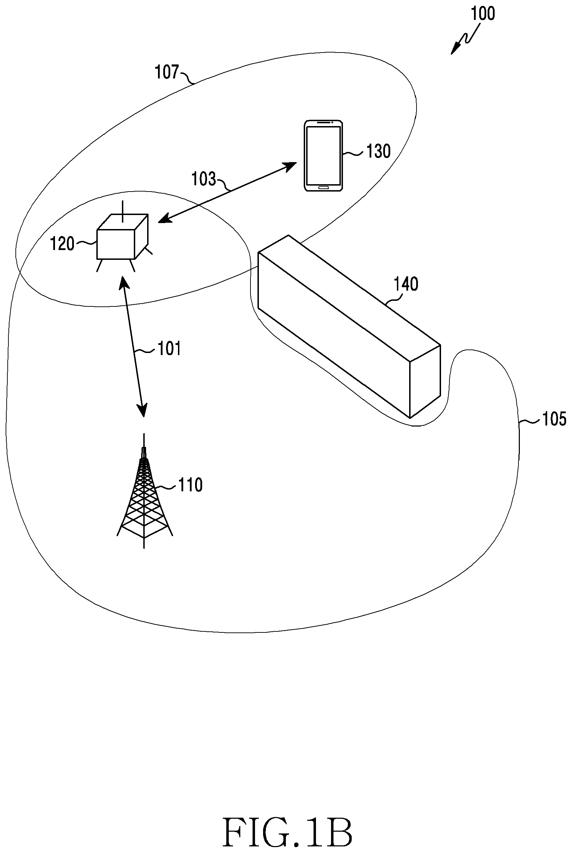

FIG. 1B illustrates an example of a wireless communication environment 100 in which a repeater device is disposed according to embodiments of the disclosure.

Referring to FIG. 1B, a wireless communication environment 100 may include a repeater device 120. In communication between a base station 110 and a wireless terminal 130, the repeater device 120 may be used to execute communication with the wireless terminal 130 which is positioned in a place where it is difficult to receive a wireless signal from any base station 110. The repeater device 120 may relay a signal received from the base station 110 to the wireless terminal 130. The repeater device 120 may amplify a signal received from the base station 110, and may transmit the amplified signal to the wireless terminal 130.

The base station 110 may have a specific area where quality of a signal to transmit is guaranteed. This is referred to as a service area, that is, a cell coverage. In particular, there is an increasing demand for a high frequency band of a wireless communication environment as 5G NR is introduced. A high frequency band may cause reduction of a coverage area due to a path loss. Accordingly, the importance of guaranteeing a cell coverage is more highlighted.

As shown in FIG. 1B, the base station 110 may have a specific cell coverage 105. However, the cell coverage 105 may be influenced by an obstacle 140 in a surrounding environment. For example, as shown in FIG. 1B, the obstacle 140 may be positioned between the base station 110 and the terminal 130 which is a target of signal transmission from the base station 110. The cell coverage 105 of the base station 1100 may not include the terminal 130. The terminal 130 may be positioned out of coverage due to the obstacle 140. The terminal 130 positioned out of the coverage may have difficulty in receiving a downlink signal from the base station 110.

As shown in the example of FIG. 1B, the repeater device 120 may be used for the purpose of servicing the terminal 130 out of the coverage or enhancing the coverage. The repeater device 120 may relay signal exchange between the base station 110 and the terminal 130. The repeater device 120 may receive a downlink signal from the base station 110. The repeater device 120 may amplify the received downlink signal and may transmit the amplified signal to the terminal 130. The base station 110 may communication with the terminal 130 which is out of the coverage 105 by using the repeater device 120.

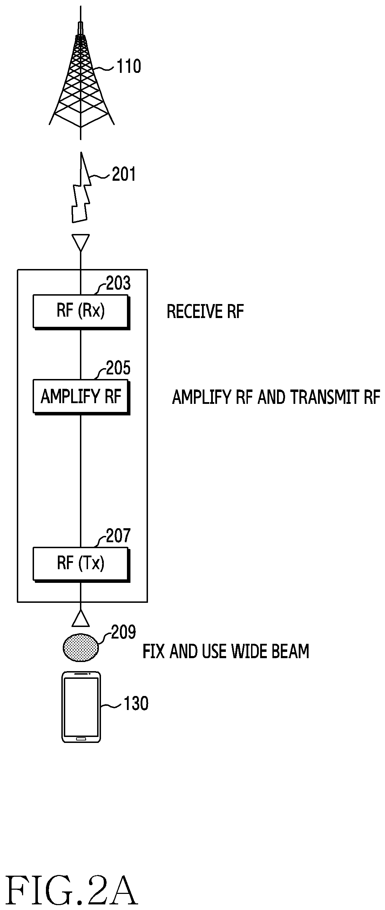

FIG. 2A illustrates a functional configuration of a repeater device 120 for signal amplification according to embodiments of the disclosure. A procedure of signal amplification which is a normal function of the repeater device 120 will be described with reference to FIG. 2A. The term "unit" or terms ending with suffixes "-er," and "-or" used in the following descriptions refer to a unit processing at least one function or operation, and may be implemented by hardware, software, or a combination of hardware and software.

Referring to FIG. 2A, specifically, operations in which a downlink signal 201 transmitted from a base station 110 arrives at a terminal 130 via the repeater device 120 are illustrated by way of an example. As shown in FIG. 2A, the repeater device 120 may include a receiver (for example, a doner) 203 to receive a downlink signal transmitted from the base station 110, an amplifier 205 to amplify the received downlink signal, and a transmitter 207 to transmit a signal to the terminal 130. First, the base station 110 may transmit a downlink signal. The repeater device 120 which is positioned within a cell coverage 105 of the base station 110 may receive a downlink signal transmitted by the base station 110. The repeater device 120 may amplify the received downlink signal. The repeater device 120 may transmit the amplified downlink signal to the terminal 130. In an example, the repeater device 120 may fix and use a wide beam 209 to transmit the downlink signal to the terminal 130. In transmitting a signal by using the repeater device 120, only the base station 110 may perform beam sweeping. The terminal 130 may feed back a preferred beam among beams of the base station 110 based on beam sweeping of the base station 110. A beam feedback signal of the terminal 130 may be transmitted to the base station 110. However, this should not be considered as limiting, and the beam feedback signal may be transmitted to the base station 110 via the repeater device 120. The base station 110 may perform beamforming based on the feedback signal of the terminal 130. The base station 110 may transmit a downlink signal based on beamforming. The repeater device 120 may amplify the downlink signal transmitted from the base station 110. The repeater device 120 may transmit the amplified downlink signal to the terminal 130.

Meanwhile, when the repeater device 120 simply amplifies a signal and transmits the amplified signal to the terminal as shown in FIG. 2A, interference with other cells may occur. This is because the repeater device 120 does not know information on cells. Also, if only the fixed wide beam 209 is used, the repeater device 120 may be more disadvantageous than an IAB node in terms of a cell coverage. To solve the above-described problems, embodiments of the disclosure propose amplifying by the repeater device 120 based on beam information of the base station.

To explain "beams" in the disclosure, the following terms may be used. A quasi co-location (QCL) resource refers to a beam, an antenna port, a reference signal (RS) resource, a channel state indicator-reference signal (CSI-RS) resource, or a combination of an antenna port and a RS resource in the unit of time. Herein, the unit of time may refer to a block of one or more OFDM symbols. A RS resource may refer to a CSI-RS resource, a beam reference signal (BRS), and a demodulation reference signal (DMRS) port set. A Tx beam may refer to a QCL resource of a RS resource. The RS resource may be a BRS or a CSI-RS. A Tx beam of the RS resource may be indexed as a unique ID which is called a Tx beam ID. A Rx beam ID may refer to an index that is recognized by a terminal and a base station in common to perform Rx beamforming operation of the terminal. A set of QCL parameters may refer to a Rx beam-related parameter (for example, an average angle of arrival, arrival angle spread), a parameter related to a delay and a timing (for example, a reception timing (Rx timing), delay spread, average delay), a parameter related to doppler (for example, average doppler, doppler spread).

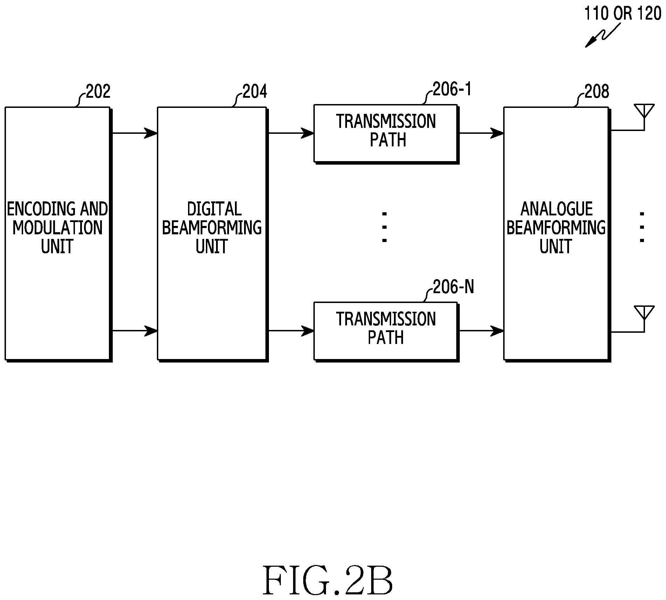

The repeater device 120 may enhance a coverage through beamforming. Hereinafter, a functional configuration of a communication unit for beamforming of the repeater device 120 will be described with reference to FIGS. 2B to 2D.

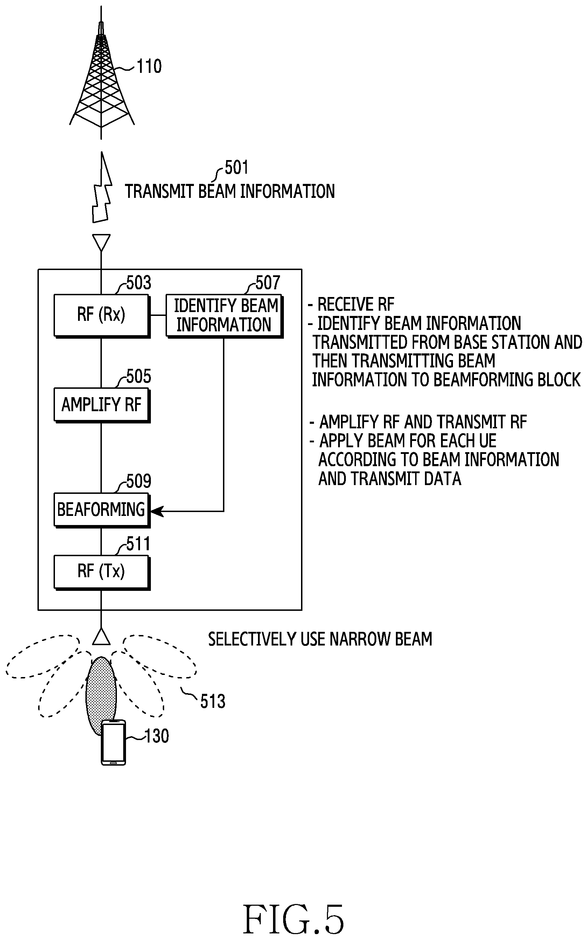

FIGS. 2B to 2D illustrate examples of a communication unit of the repeater device 120 for beamforming according to embodiments of the disclosure. For example, the communication unit may include configurations of the receiver 203, the amplifier 205, and the transmitter 207 of FIG. 2A. For example, the communication unit may be a communication unit of a repeater device illustrated in FIG. 5, and may include a beamforming unit. The communication unit of the repeater device 120 for beamforming will be described along with FIG. 5.

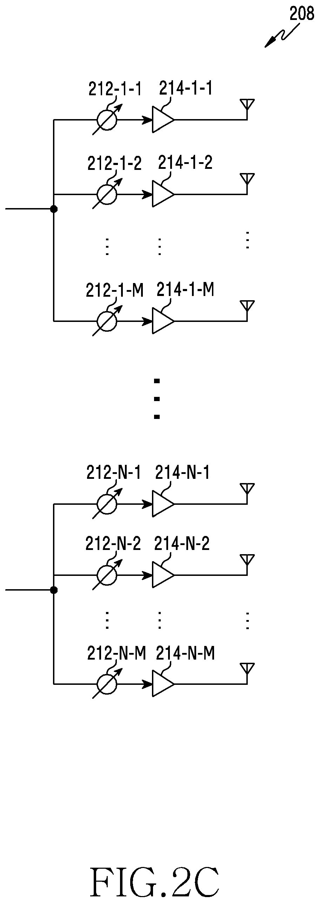

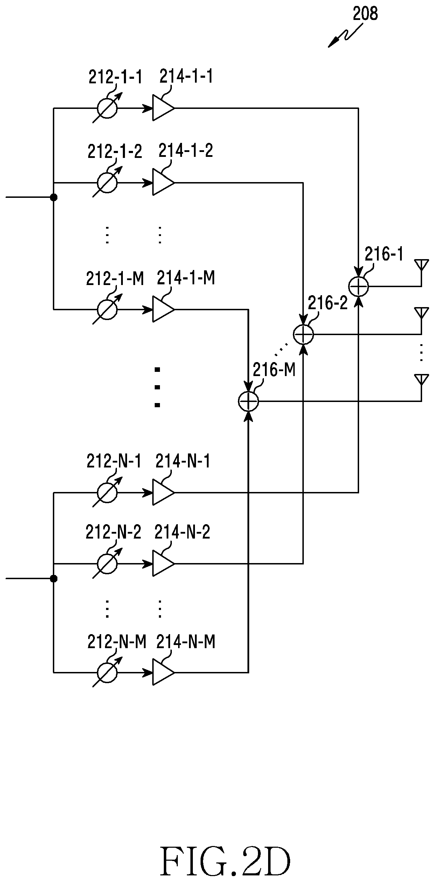

Specifically, FIGS. 2B to 2D illustrate examples of a detailed configuration of the communication unit which performs beamforming in the base station 110 or the repeater device 120. Specifically, FIGS. 2B to 2D illustrate components for performing beamforming, as part of the communication unit of the base station 110 or the repeater device 120 of FIG. 2.

Referring to FIG. 2B, the communication unit may include an encoding and modulation unit 210, a digital beamforming unit 220, a plurality of transmission paths 230-1 to 230-N, an analogue beamforming unit 240 .

The encoding and modulation unit 210 performs channel encoding. To perform channel encoding, at least one of a low density parity check (LDPC) code, a convolution code, a polar code may be used. The encoding and modulation unit 210 generates modulation symbols by performing constellation mapping.

The digital beamforming unit 220 performs beamforming on a digital signal (for example, modulation symbols). To achieve this, the digital beamforming unit 220 multiplies modulation symbols by beamforming weightings. Herein, the beamforming weightings may be used to change a size and a phase of a signal, and may be referred to as a `precoding matrix', a `precoder'. The digital beamforming unit 220 may output digitally beamformed modulation symbols to the plurality of transmission paths 230-1 to 230-N. In this case, according to a multiple input multiple output (MIMO) transmission technique, the modulation symbols may be multiplexed or the same modulation symbols may be provided to the plurality of transmission paths 230-1 to 230-N.

The plurality of transmission paths 230-1 to 230-N may convert the digitally beamformed digital signals into analogue signals. To achieve this, each of the plurality of transmission paths 230-1 to 230-N may include an inverse fast Fourier transform (IFFT) calculation unit, a cyclic prefix (CP) insertion unit, a digital to analogue converter (DAC), and an up-conversion unit. The CP insertion unit may be provided for an orthogonal frequency division multiplexing (OFDM) scheme, and may be excluded when a different physical layer scheme (for example, a filter bank multi-carrier (FBMC)) is applied. That is, the plurality of transmission paths 230-1 to 230-N may provide an independent signal processing process for a plurality of streams generated through digital beamforming. However, some of components of the plurality of transmission paths 230-1 to 230-N may be used in common according to an implementation scheme.

The analogue beamforming unit 240 may perform beamforming with respect to an analogue signal. To achieve this, the digital beamforming unit 220 may multiply analogue signals by beamforming weights. Herein, the beamforming weights may be used to change a size and a phase of a signal. Specifically, the analogue beamforming unit 240 may be configured as shown in FIG. 2C or 2D according to a connection structure between the plurality of transmission paths 230-1 to 230-N and antennas.

Referring to FIG. 2C, the analogue beamforming unit 240 may perform phase/size conversion, calculation for amplification with respect to inputted signals, and may transmit signals through antennas. In this case, signals of respective paths may be transmitted through different antenna sets, that is, antenna arrays. Referring to processing of a signal inputted through the first path, the signal may be converted into a signal stream having different or same phases/sizes by phase/size converters 242-1-1 to 242-1-M, may be amplified by amplifiers 244-1-1 to 244-1-M, and then, may be transmitted through antennas.

Referring to FIG. 2D, the analogue beamforming unit 240 may perform phase/size conversion, calculation for amplification with respect to inputted signals, and may transmit signals through antennas. In this case, signals of respective paths may be transmitted through the same antenna set, that is, antenna array. Referring to processing of a signal inputted through the first path, the signal may be converted into a signal stream having different or same phases/sizes by phase/size converters 242-1-1 to 242-1-M, and may be amplified by amplifiers 244-1-1 to 244-1-M. In addition, to transmit through one antenna array, the amplified signals may be added by adders 246-1-1 to 246-1-M with reference to antenna elements, and then, may be transmitted through antennas.

FIG. 2C illustrates an example of using an independent antenna array according to a transmission path, and FIG. 2D illustrates an example of transmission paths sharing one antenna array. However, according to another embodiment, some of the transmission paths may use independent antenna arrays, and the other transmission paths may share one antenna array. Furthermore, according to still another embodiment, a switchable structure may be applied between transmission paths and antenna arrays, so that a structure adaptively changeable according to a situation may be used.

Embodiments of the disclosure may include a method for identifying a beam of a repeater device 120 in a base station 110 (beam management method), and a method for transmitting identified beam information to a repeater when a beam is managed (beam transmission and control method). Specifically, a beam of the base station 110 and a beam of the repeater may be identified through the beam management method. Herein, a beam of the base station 110 refers to transmission of a signal generated by the base station 110 with resources allocated by the base station 110. In addition, a beam of the repeater device 120 refers to transmission of a signal generated by the repeater device 120 with resources allocated for the repeater device 120 by the base station 110.

According to control information, beamforming management when the terminal 130 is directly connected to the base station 110, and beamforming management when the terminal is connected to the base station 110 through the repeater device 120 may be different. According to embodiments of the disclosure, the base station 110 may deliver control information (for example, beam information, time division duplex (TDD) configuration information, a synchronization signal block (SSB) position, etc.) to the repeater device 120. The repeater device 120 may identify whether to perform beamforming based on the control information received from the base station 110. The repeater device 120 may apply a beam based on the identified beam information, and may transmit a downlink signal to the terminal 130 by using the applied beam.

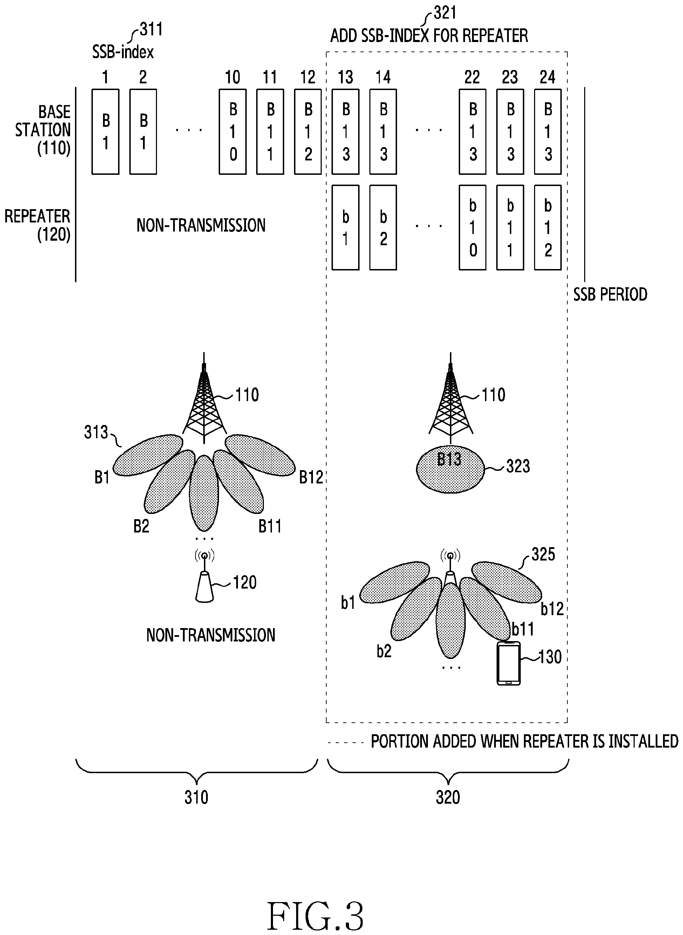

Hereinafter, operations of a repeater device 120 for amplifying based on beam information of a base station 110 will be described through FIGS. 3 to 6.

### -Beam management method-

FIG. 3 illustrates an example of addition of a synchronization signal block (SSB) index for a repeater device according to embodiments of the disclosure.

When analogue beams are managed, beam management may be performed by a base station 110 or a repeater device 120. The purpose of beam management is to acquire enhanced communication quality by selecting an appropriate beam direction of a transmission end and a beam pair of a reception end that is suitable to the corresponding beam direction. Beam management may include a beam sweeping process. To adjust beams, a transmission beam of the base station 110 or repeater device 120 may be minutely adjusted while maintaining a reception beam used in a terminal 130. To achieve this, the terminal 130 may measure a reference signal that represents different downlink beams. Beam sweeping may be performed by transmitting different downlink beams in sequence. The above-described example has been described with reference to downlink transmission side beam adjustment, but this is merely an example, and uplink transmission side beam adjustment may be explained as beam sweeping.

In managing beams, the base station 110 may transmit a separate pilot signal for each beam in order for the terminal 130 to recognize a downlink transmission beam. According to an embodiment, in a 5G NR system, a synchronization signal block (SSB) may be generally used as a pilot signal. Each beam may be indicated by an indicator (or an index) such that a transmission beam of the base station 110 may be managed in the terminal 130. Each beam may be individually assigned a SSB index to be mapped thereto. In a related-art technology, multiple beams (beamforming) are managed only in the base station 110, and accordingly, a SSB index may be assigned only to a beam of the base station 110. However, in the disclosure, a beam set for the repeater device 120 that is distinguished from a beam set of the base station 110 may be used. That is, a SSB index may be assigned to a beam of the repeater device 120.

According to an embodiment, when beam sweeping is performed, the base station 110 and the repeater device 120 may perform beam sweeping in sequence. For example, the base station 110 may perform beam sweeping by using respective beams of the beam set of the base station 110, and the repeater device 120 may perform beam sweeping by using respective beams of the beam set of the repeater device 120.

The terminal 130 may select a beam (for example, a beam having the best quality) based on beam sweeping of the base station 110 or the repeater. The terminal 130 may identify a SSB index corresponding to the selected beam. The terminal 130 may generate a feedback signal related to the identified index, and may transmit the generated feedback signal to the base station 110. In this case, the feedback signal of the terminal 130 is not limited to being directly transmitted to the base station 110, and may be transmitted to the base station 110 via the repeater device 120 which is positioned between the base station 110 and the terminal 130. The base station 110 may receive the feedback signal of the terminal 130 from the terminal 130 or the repeater device 120. The base station 110 may identify a beam related to downlink signal transmission, based on the received feedback signal. The number of beams and beam directions illustrated in FIG. 3 are merely examples, and the number of beams, beam sizes, beam directions of the base station 110 and the repeater may be variously combined when they are managed.

Referring to FIG. 3, the base station 110 may manage a first SSB index list 311 for beamforming of the base station 110, and a second SSB index list 321 for beamforming of the repeater device 120. This is because even when beamforming is performed in the repeater device 120, the base station 110 should allocate resources for each SSB in the second SSB index list 321 for beamforming of the repeater device 120. Hereinbelow, Bxx (xx is a number) indicates an index of a beam allocated in the base station 110, and bxx refers to an index of a beam managed in the repeater device 120. The first SSB index list 311 may include 12 SSB indexes. The second SSB index list 321 may include 12 SSB indexes.

According to an embodiment, the base station 110 may constitute resources for the first SSB index list 311 for beamforming of the base station 110, and for the second SSB index list 321 for beamforming of the repeater device 120. The base station 110 may constitute resources for SSB index 1 to SSB index 24. According to NR standards, a SSB may be comprised of a primary synchronization signal and a secondary synchronization signal, and each synchronization signal may occupy one symbol and 127 sub-carriers, and a PBCH may be positioned over 3 OFDM symbols and 240 sub-carriers. A SSB may be positioned on four continuous OFDM symbols in total. The base station 110 may transmit multiple SSBs within a frequency range of a carrier. There is no need to own a physical cell identity (PCI) of a SSB transmitted on a different frequency position. That is, a different SSB of a frequency domain may have a different PCI.

The base station 110 may constitute resources to transmit the above-described SSBs in a half-frame. A possible time position of a SSB within the half-frame may be determined by a subcarrier spacing (for example, 15 kHz, 30 kHz, 120 kHz, 240 kHz). In addition, a periodicity of the half-frame in which a SSB is transmitted may be configured by a network. According to an embodiment, a different SSB may be transmitted in a different space direction during the half-frame. That is, the base station 110 may beam-sweep SSBs by using different beams over a coverage area of cells.

The base station 110 may use an exiting narrow beam in transmission resources of SSB indexes 1 to 12 through which the base station 110 directly performs beamforming. The base station 110 may perform beamforming based on a beamforming weight which is set for each SSB index in the first SSB index list 311. The base station 110 may use a wide beam in transmission resources of SSB indexes 13 to 24. According to an embodiment, the repeater device 120 may not perform signal transmission at transmission times of SSB indexes 1 to 12. The repeater device 120 may receive a downlink signal from the base station 110 at transmission times of beam indexes 13 to 24, and may amplify the received downlink signal. The repeater device 120 may perform beamforming with respect to the amplified signal, based on a beamforming weight which is set for each SSB index identified. The repeater device 120 may transmit a repeater beamforming signal for which beamforming is performed to the terminal 130. The repeater device 120 may guarantee an enhanced coverage 107 by transmitting the repeater beamforming signal for which beamforming is performed.

According to an embodiment, the terminal 130 may identify one of SSB indexes 1 to 24 based on beam sweeping performed by the base station 110 or the repeater device 120. For example, the terminal 130 may identify one of SSB indexes 1 to 12. The base station 110 may receive a feedback signal for indicating one index of SSB indexes 1 to 12 that is identified by the terminal 130. In this case, the base station 110 may identify that the terminal 130 is directly connected to the base station 110. In another example, the terminal 130 may identify one of SSB indexes 13 to 24 based on the beam sweeping. The base station 110 may receive a feedback signal based one index of SSB indexes 13 to 24 that is identified by the terminal 130. In this case, the base station 110 may identify that the terminal 130 is connected to the base station 110 through the repeater device 120. For example, referring to FIG. 3, the terminal 130 may be positioned closest to beam b 11 among the beams of the repeater device 120. In this case, the terminal 130 may identify SSB index 23, and may transmit a feedback signal which is based on the identified index to the base station 110. The base station 110 which receives the feedback signal from the terminal 130 may identify that the terminal 130 prefers beam B13 of the base station 110, beam b11 of the repeater. Accordingly, the base station 110 may transmit control information which is based on the beam of SSB index 23 to the repeater device 120, and the repeater device 120 which receives the control information may select an appropriate beam and may transmit a downlink signal received from the base station 110.

When the base station 110 supports a plurality of repeater devices 120 in a specific cell, the number of usable SSB indexes may be inefficient if a plurality of beams rather than a single beam such as the wide beam 209 of FIG. 2A are used. Since the base station 110 requires not only indexes for beamforming in the base station 110 but also indexes for beamforming of each repeater device 120, the number of SSB indexes required may exponentially increase. Accordingly, the base station 110 according to embodiments of the disclosure may use a single beam 323 in resources of the beams of the second SSB index list 321 for the repeater device 120. According to an embodiment, the single beam may be a wide beam 323 that has a wider beam width than individual beamforming (for example, B1 to B12). The base station 110 may adaptively adjust the number of necessary SSB indexes by using the wide beam 323.

Meanwhile, if there is no restriction to the number of SSB indexes, the base station 110 may form a plurality of beams in the resources of the beams of the second SSB index list 321 for the repeater device 120. Herein, the beam may have a narrow beam that has a relatively narrower beam width than the single beam. In addition, according to another embodiment, a management method in which the base station 110 uses a narrow beam and the repeater device 120 uses a wide beam according to a position of the terminal 130 may also be understood as an embodiment of the disclosure. In addition, according to another embodiment, considering a performance aspect, a beam width in the base station 110 and a beam width in the repeater device 120 may be adaptively converted in a state in which the first SSB index list 311 for beamforming of the base station 110 and the second SSB index list 321 for beamforming of the repeater device 120 are set.

FIG. 3 illustrates that the number of beams of the base station 110 and the number of beams of the repeater device 120 are 12, but embodiments of the disclosure are not limited thereto. The number of beams managed in each list, a beamforming weight for each list are not interpreted as being limited to the example of FIG. 3.

In the disclosure described hereinbelow, a SSB is exemplified as a reference signal for beamforming, but not only a SSB but also other reference signals may be used. According to an embodiment, a CSI-RS may be used for beam information-based amplification of the repeater device. An ID indicating a CSI-RS resource indicating a CSI-RS may be used for the repeater device 120. In this case, a CSI-RS resource indicator (CRI) of a CSI may be used as feedback of the terminal.

### -Beam transmission and control method-

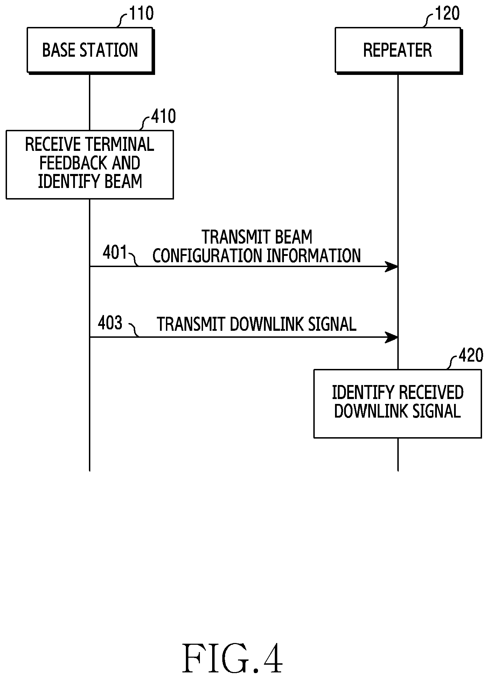

FIG. 4 illustrates an example of signaling between the base station 110 and the repeater device 120 according to embodiments of the disclosure.

Referring to FIG. 4,
in action 410, the base station 110 may generate beam configuration information. The base station 110 may receive a feedback signal (for example, a RACH preamble or a CSI) from the terminal 130. The feedback signal may be used to indicate a beam index (for example, a SSB index or a CRI) identified by the terminal 130. The base station 110 may constitute beams to be applied to downlink transmission based on the feedback signal. Based on the constituted beams, the base station 110 may generate beam configuration information for the repeater device. For example, the beam configuration information may include the second SSB index list 321 for the repeater device 120.

In action 401, the base station 110 may transmit the beam configuration information to the repeater device 120. According to an embodiment, the beam configuration information may be periodically transmitted. According to another embodiment, the beam configuration information may be aperiodically transmitted according to a setting change or a designated event.

According to an embodiment, the base station 110 may control a repeater operation by transmitting the control information to the repeater device 120. In this case, the transmitted control information may include not only beam configuration information but also information on the bean index list 321 for the repeater device, a time at which a beam is applied (for example, a slot, a symbol), a SSB transmission timing, and uplink downlink (UD) configuration information. According to an embodiment, the repeater device 120 may acquire the beam index list 321 for the repeater device, and may identify beamforming information for transmitting a downlink signal based on the beam index list 321. The beamforming information may refer to a beaming weight (for example, an amplitude size or a phase pattern) applied to transmit a downlink signal.

The repeater device 120 according to an embodiment may identify a slot configuration regarding an uplink and a downlink in a time division duplex (TDD) system, based on the UD configuration information. The repeater device 120 may reduce interference influence on other cells by performing amplification and transmission based on the UD configuration information, rather than always amplifying and transmitting a received signal.

According to an embodiment, the repeater device 120 may transmit status information of the repeater device 120 to the base station 110 when necessary although this operation is not illustrated in FIG. 4. In this case, the transmitted status information may include the following information. The status information may include a repeater index, a capability of the repeater, and a beam of the base station 110 that is preferred by the repeater device 120. The base station 110 may acquire status information from the repeater device 120. The base station 110 may generate beam configuration information for beamforming in the repeater device 120, based on the status information of the repeater device 120.

According to an embodiment, the status information may be transmitted from the repeater device 120 after the feedback signal of the terminal 130 is transmitted. According to an embodiment, the status information may be transmitted from the repeater device 120 before the feedback signal of the terminal 130 is transmitted. When there are a plurality of repeater devices 120, the base station 110 may identify a specific repeater device 120 based on received repeater index information. The base station 110 may adaptively identify a beam weight based on information on the capability (for example, the number of beams) of the repeater received. For example, it may be determined whether a coverage is wide or narrow, based on the number of beams of the repeater.

In action 403, the repeater device 120 may receive a downlink signal. The downlink signal may include at least one of a physical downlink shared channel (PDCCH), a physical downlink shared channel (PDSCH), a demodulation reference signal (DMRS), a channel state information-reference signal (CSI-RS).

In action 420, the repeater device 120 may identify a beam index related to the received downlink signal. The beam index related to the received downlink signal refers to an index that is used for the repeater device 120 to beamform a received downlink signal. According to an embodiment, the repeater device 120 may determine whether to amplify the downlink signal based on beamforming, based on the beam configuration information of the base station 110. If the beam index related to the downlink signal is included in the repeater index list for the repeater device 120, the repeater device 120 may amplify the downlink signal and may transmit the amplified signal to a terminal. If the downlink signal is transmitted, the repeater device 120 may identify beamforming information corresponding to the beam index related to the downlink signal, based on the beam configuration information of the base station 110. By applying a beamforming weight according to the beamforming information, the repeater device 120 may transmit the amplified downlink signal through beamforming.

In the above or following descriptions, a method for beamforming based on identification of a SSB index is mainly described for the convenience of explanation, but the disclosure is not limited thereto. The base station 110 may transmit a signal other than a SSB, for example, a CSI-RS or a signal combining a SSB and a CSI-RS, as a pilot signal indicating a beam. That is, according to an embodiment, the base station 110, the repeater device 120, and the terminal 130 may transit or receive a feedback signal and a signal including control information through higher layer signaling (for example, RRC signaling). Furthermore, technologies may be extended in the same method as described above.

FIG. 4 illustrates an example in which the base station 110 transmits beam configuration information to the repeater 120, but embodiments of the disclosure are not limited thereto. According to an embodiment, a SSB index list for the repeater device 120 may be pre-set in the repeater device 120.

FIG. 5 illustrates a functional configuration of the repeater device 120 for amplifying signals based on beam information of the base station according to embodiments of the disclosure.

Referring to FIG. 5, the repeater device 120 may include a receiver 503, an amplifier 505, a beamforming unit 509, and a transmitter 511. The receiver 503, the amplifier 505, the beamforming unit 509, the transmitter 511 may be included in a unit, which is referred to as a communication unit. The communication unit may include at least one transceiver. For example, the communication unit may transmit a downlink signal. The downlink signal may include a synchronization signal, a reference signal (for example, a cell-specific reference signal (CRS), a demodulation (DM)-RS), system information (for example, a MIB, a SIB, remaining system information (RMSI), other system information (OSI)), a message (for example, a RRC message), control information, or downlink data. In addition, the communication unit may receive an uplink signal. The uplink signal may include uplink control information (UCI), a random access-related signal (for example, a random access preamble (RAP) (or message 1 Msg1, message 3 Msg3)), a reference signal (for example, a sounding reference signal (SRS), a DM-RS), or a buffer status report (BSR). For example, the uplink control information may include at least one of a scheduling request (SR), ACK/NACK information of a hybrid acknowledge (HARQ) procedure, or channel state information (CSI). According to an embodiment, the communication unit may perform beamforming. The communication unit may apply a beamforming weight to a signal in order to give directionality according to a configuration of a controller to a signal to transceiver. According to an embodiment, the communication unit may generate a baseband signal according to a result of scheduling and a result of calculating transmit power. In addition, a RF unit in the communication unit may transmit a generated signal through an antenna.

The communication unit transmits and receives signals as described above. Accordingly, an entirety or a part of the communication unit may be referred to as a 'transmitter', a 'receiver,' or a 'transceiver'. In addition, in the following descriptions, transmission and reception performed through a wireless channel may be used to mean performing the above-described processing by the communication unit.

Hereinafter, operations related to the functional configuration of the repeater device 120 will be described.

According to an embodiment, as beam sweeping of the base station 110 or the repeater device 120 is performed, a first terminal positioned within a boundary of the coverage 107 of the repeater device 120 may be identified although this operation is not illustrated. The first terminal may identify at least one index in the SSB index list 321 for the repeater among the SSB index lists. The first terminal may transmit a feedback signal including the identified index information to the repeater device 120 or the base station 110. The repeater device 120 may transmit the received feedback signal to the base station 110. The base station 110 may identify beam information based on the feedback signal received from the first terminal.

Referring to FIG. 5, the base station 110 may transmit control information (for example, configuration information) which is based on the identified beam information to the repeater device 120. The base station 110 may transmit, to the repeater device 120, a downlink signal to transmit to the first terminal. The repeater device may receive a signal from the base station through the receiver 503. The repeater device 120 may identify a beam that is preferred by the first terminal based on the received control information through a processor 507. The processor 507 of the repeater device 120 may identify a time (for example, a slot, a symbol) at which a beam is applied, and a beam index which is identified by a second terminal, based on the received control information. Specifically, the repeater device 120 may identify whether an index of the downlink signal transmitted by the base station 110 is included in the repeater index list. The amplifier 505 of the repeater device 120 may amplify the downlink signal when it is identified that the index of the downlink signal transmitted by the base station 110 is included in the repeater index list. The beamforming unit 509 of the repeater device 120 may generate a repeater beamforming signal by applying a beamforming weight to the amplified downlink signal. The repeater device 120 may transmit, to the first terminal via the transmitter 511, the generated repeater beamforming signal via a narrow beam identified by performing beamforming. Through the above-described process, the base station 110 may transmit the downlink signal to the first terminal which is positioned out of the boundary of the coverage 105 of the base station 110. In addition, the repeater device 120 may perform beamforming, thereby performing communication with the first terminal with a higher probability and higher quality than when using a wide beam.

According to an embodiment, as beam sweeping of the base station 110 or the repeater device 120 is performed, the second terminal positioned within the boundary of the coverage 105 of the base station 110 may be identified although this is not illustrated. The second terminal may identify at least one index of indexes other than the SSB index list 321 for the repeater among the SSB index lists. The second terminal may transmit a feedback signal including the identified index information to the repeater device 120 or the base station 110. The repeater device 120 may transmit the received feedback signal to the base station 110. The base station 110 may identify beam information based on the feedback signal received from the second terminal. The base station 110 may identify a beam that is preferred by the second terminal, based on the received feedback signal. The base station 110 may identify a time (for example, a slot, a symbol) at which a beam is applied and a beam index which is identified by the second terminal, based on the received feedback signal. The base station 110 may identify whether an index of the received feedback signal is at least one index of indexes other than the repeater index list. The base station 110 may generate a downlink signal based on the identified beam information. When it is identified that the index of the received feedback signal is not included in the repeater index list, the base station 110 may generate a beamforming signal by applying a beamforming weight to the downlink signal. The base station 110 may perform beamforming with respect to the generated beamforming signal, thereby transmitting the signal to the second terminal through an identified narrow beam. According to an embodiment, the base station 110 may transmit the generated beamforming signal to the repeater device 120. The amplifier 505 of the repeater device 120 may amplify the received beamforming signal. The repeater device 120 may transmit the amplified downlink beamforming signal to the second terminal through the transmitter 511.

Through the above-described process, it is determined whether beamforming of each entity is performed according to a position of the terminal 130, for example, whether the terminal 130 is positioned within the boundary of the coverage 105 of the base station 110 or out of the boundary of the coverage 105 of the base station 110 and within the boundary of the coverage 107 of the repeater device 120. The terminal 130 may adaptively identify a preferred beam by each functional configuration of the repeater device 120 and the added SSB index list 321 for the repeater. The terminal 130 may adaptively identify a preferred beam, so that more enhanced and efficient wireless communication may be performed.

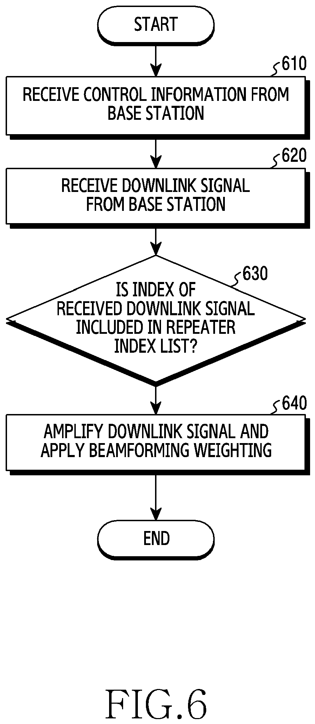

FIG. 6 illustrates an operation flow of the repeater device 120 for amplifying based on beam information according to embodiments of the disclosure. Prior to performing operations according to FIG. 6, the base station 110 or the repeater device 120 according to an embodiment may identify the terminal 130 by performing beam sweeping although this operation is not illustrated in FIG. 6. The identified terminal 130 may identify a beam index based on beam sweeping. The terminal 130 may generate a feedback signal based on the identified beam index. The terminal 130 may transmit the generated feedback signal to the base station 110. In this case, the feedback signal that the terminal 130 transmits may be transmitted to the base station 110 via the repeater device 120. The base station 110 may identify beam information based on the received feedback signal. The base station 110 may transmit control information to the repeater device 120 based on the identified beam information.

Referring to FIG. 6, according to an embodiment, in action 610, the repeater device 120 may receive control information from the base station. The repeater device 120 may receive control information including configuration information indicating a repeater index list from the base station 110. According to an embodiment, the repeater device 120 may identify whether to perform beamforming, based on a SSB index list (for example, the first SSB index list 311 for beamforming of the base station 110 of FIG. 3, and the second SSB index list 321 for beamforming of the repeater device 120) included in the control information received from the base station 110. According to an embodiment, the repeater device 120 may identify a usable beam based on the control information received from the base station 110.

The control information that the repeater device 120 receives may include at least one of configuration information indicating a SSB index list, beamforming weight information for each index list, information on uplink downlink (UD) configuration, information on a SSB position, or information on a SSB transmission timing. The information on the UD configuration may include information on an uplink and downlink area allocated to the terminal 130 in an area where time duplex division (TDD) is applied. The repeater device 120 may avoid interference with other cells by receiving the information on the UD configuration. For example, when the base station guarantees an expanded cell coverage due to the repeater device, a problem that the cell coverage overlaps a cell coverage area of another base station may arise. In this case, the terminal 130 may receive the information on the UD configuration from the base station 110 via the repeater device 120. The terminal 130 may transceive signals based on the information on the UD configuration received. Even when the terminal 130 exists in a coverage area of another base station, the terminal 130 may avoid interference with signals of another base station, based on the information on the UD configuration.

However, the disclosure is not limited to the process in which the repeater device 120 receives control information, and according to an embodiment, configuration information indicating a SSB index list may be pre-set in the repeater device 120. In addition, SSB index lists of other combinations than the illustrated SSB index lists are possible. For example, although only B13 is illustrated as a beam index of the base station 110 of the SSB index list 321 for the repeater in FIG. 3, various types of narrow beams may be set as the beam index of the base station 110 of the SSB index list 321 for the repeater. An index of the repeater device 120 in the case of the index list other than the SSB index for the repeater is not illustrated in FIG. 3 (for example, the repeater device 120 does not transmit), but this is merely an example. In the disclosure, an index regarding a wide beam of the repeater device 120 may be set as a beam index. As described above, embodiments of the disclosure may be applied to identification information of other reference signals in addition to the SSB index list of FIG. 3. According to an embodiment, an index of at least one of a SSB or other signals other than the SSB (for example, a CSI-RS, a combination of a SSB and a CSI-RS) may be used as a beam index of the disclosure.

In action 620, the repeater device 120 may receive a downlink signal from the base station 110. The downlink signal that the repeater device 120 receives may be a signal (for example, a physical downlink control channel (PDCCH), a physical downlink shared channel (PDSCH)) including data (for example, DCI) that the base station 110 intends to transmit to the terminal 130. The downlink signal that the repeater device 120 receives may include the control information including the configuration information indicating the repeater index list, received in action 610.

According to an embodiment, the downlink signal that the repeater device 120 receives may be generated based on status information of the repeater device 120 that the repeater device 120 transmits to the base station 110. The repeater device 120 may transmit status information of the repeater device 120 to the base station 110, and transmission of the status information may be performed before or after downlink transmission of the base station 110 or simultaneously. According to an embodiment, the status information of the repeater device 120 may include at least one of a repeater index, a capability of the repeater, and a beam of the base station 110 preferred by the repeater 120. According to an embodiment, when there are a plurality of repeater devices 120, the base station 110 may identify a specific repeater device 120 based on received repeater index information. According to an embodiment, the base station 110 may adaptively identify a beam weight based on information on the capability (for example, the number of beams) of the repeater received.

In action 630, the repeater device 120 may identify whether an index of the received downlink signal is included in a repeater index list. The repeater index list refers to a SSB index list that should be transmitted not through beamforming of the base station but through beamforming of the repeater device 120. The index of the downlink signal may refer to an index of a beam associated with the downlink signal or a beamformed reference signal (for example, a SSB index or a CSI-RS resource ID).

According to an embodiment, when the terminal 130 prefers a beam of the base station 110, for example, when the terminal 130 is positioned within the coverage 105 of the base station 110, the terminal 130 may identify at least one index (for example, SSB indexes 1 to 12) in the SSB index list 311 rather than the SSB index list 321 for the repeater. According to an embodiment, configuration information indicating the SSB index list may be pre-set in the repeater device 120. In addition, according to an embodiment, when the terminal 130 prefers a beam of the repeater device 120, for example, when the terminal 130 is positioned out of the coverage 150 of the base station 110 and is positioned within the coverage of the repeater device 120, the terminal 130 may identify at least one index (for example, SSB indexes 13 to 24) in the SSB index list 321 for the repeater. According to an embodiment, configuration information indicating the SSB index list may be pre-set in the repeater device 120.

When the index of the received downlink signal is included in the repeater index list, the repeater device 120 may perform action 640. When the index of the received downlink signal is not included in the repeater index list, the repeater device 120 may simply amplify the received downlink signal without performing beamforming, and may transmit the downlink signal although this operation is not illustrated.

In action 640, the repeater device 120 may amplify the downlink signal and may apply a beamforming weight to the amplified downlink signal. The repeater device 120 may transmit a repeater beamforming signal to which the beamforming weight is applied. When the terminal 130 prefers at least one beam among beams of the repeater device 120 (for example, when the terminal 130 is positioned out of the coverage 105 of the base station 110 and is positioned within the coverage 107 of the repeater device 120), the terminal 130 may identify at least one index in the SSB index list 321 for the repeater. The terminal 130 may transmit a feedback signal which is based on the identified index to the base station 110. The base station 110 may transmit control information which is based on the received feedback signal to the repeater device 120. The repeater device 120 may obtain a SSB index of the beam identified by the terminal 130 based on the received control information, and the identified SSB index may be at least one index in the repeater index list. The repeater device 120 may identify a beam corresponding to the identified SSB index based on the identified SSB index. That is, the repeater device 120 may amplify the downlink signal containing data that the base station 110 intends to transmit to the terminal 130, and may apply a beamforming weight which is based on the identified SSB index to the amplified downlink signal. As a result of applying the beamforming weight, the repeater device 120 may transmit the received downlink signal by using a narrow beam. When the narrow beam is used, the repeater device 120 may perform more enhanced communication in a wider coverage area than when using a wide beam.

It is illustrated in FIG. 6 that when the index of the received downlink signal is not included in the repeater index list, the repeater device 120 finishes the procedure. However, embodiments of the disclosure are not limited thereto. According to an embodiment, when the index of the received downlink signal is not included in the repeater index list, the repeater device 120 may amplify the downlink signal and may transmit the amplified downlink signal, although this operation is not illustrated. When the terminal 130 prefers at least one beam among beams of the base station 110 (for example, when the terminal 130 is positioned within the coverage 105 of the base station 110), the terminal 130 may identify at least one index in the SSB index list 311 rather than in the SSB index list 321 for the repeater. The terminal 130 may transmit a feedback signal which is based on the identified index to the base station 110. The base station 110 may obtain a SSB index of the beam identified by the terminal 130 based on the received feedback signal, and the identified SSB index may be at least one index in an index list other than the repeater index list. The base station 110 may identify a beam corresponding to the identified SSB index based on the identified SSB index. The base station 110 may apply a beamforming weight based on the identified SSB index. As a result of applying the beamforming weight, the base station 110 may transmit the downlink signal containing data to transit to the terminal 130 by using a narrow beam. However, the disclosure is not limited to the base station 110 directly transmitting a downlink signal to the terminal 130. According to an embodiment, the base station 110 may transmit the downlink signal to the repeater device 120. However, in this case, the repeater device 120 may identify that the index of the received downlink signal is not included in the repeater index list, and may not perform beamforming. The repeater device 120 that does not perform beamforming may simply amplify the received downlink signal, and may transmit the amplified downlink signal.

FIGS. 3 to 6 illustrate operations of the repeater device 120 for a received downlink signal, but embodiments of the disclosure are not limited thereto. Embodiments of the disclosure may be applied not only to a downlink signal but also to an uplink signal. Uplink beamforming resources may be used for beamforming of an uplink signal. An uplink signal may include uplink data transmission (for example, a PUSCH), uplink control information (for example, a PUCCH) transmission or uplink reference signal (for example, a DMRS, a SRS). According to an embodiment, uplink beamforming resources may refer to SRS resources indicated by a SRS resource indicator (SRI). The uplink beamforming resources may be associated with downlink beamforming resources (for example, a SSB index, a CSI-RS resource ID). The repeater device 120 may perform amplification or may perform beamforming according to whether downlink beamforming resources associated with an index of the received uplink signal are included in the downlink index list for the repeater device 120.

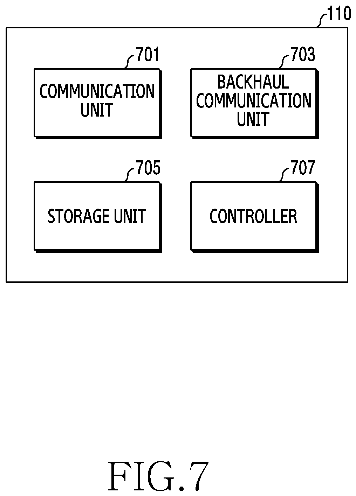

FIG. 7 illustrates a functional configuration of a base station 110 in a wireless communication system according to embodiments of the disclosure.

The term "unit" or terms ending with suffixes "-er," and "-or" used in the following descriptions refer to a unit processing at least one function or operation, and may be implemented by hardware, software, or a combination of hardware and software.

Referring to FIG. 7, the base station 110, 110 may include a communication unit 701, a backhaul communication unit 703, a storage unit 705, and a controller 707.

The communication unit 701 performs functions for transmitting and receiving signals via a wireless channel. For example, the communication unit 701 may perform a function of converting between a baseband signal and a bit stream according to a physical layer standard of the system. For example, when transmitting data, the communication unit 701 may generate complex symbols by encoding and modulating a transmission bit stream. In addition, when receiving data, the communication unit 701 may reconstruct a reception bit stream by demodulating and decoding a baseband signal. The communication unit 701 may be configured to perform at least one of operations of a transmission end or operations of a reception end. According to an embodiment, the communication unit 701 may be configured to receive an uplink signal from a terminal 130.

The communication unit 701 may up-convert a baseband signal into a radio frequency (RF) band signal, and then may transmit the signal via an antenna, and may down-convert an RF band signal received via an antenna into a baseband signal. To achieve this, the communication unit 701 may include a transmission filter, a reception filter, an amplifier, a mixer, an oscillator, a digital to analog converter (DAC), an analog to digital converter (ADC), etc. In addition, the communication unit 701 may include a plurality of transmission and reception paths. Furthermore, the communication unit 701 may include at least one antenna array including a plurality of antenna elements. In the hardware aspect, the communication unit 701 may be configured by a digital unit and an analog unit, and the analog unit may be configured by a plurality of sub-units according to operating power, an operating frequency, or the like. According to an embodiment, the communication unit 701 may include a unit for forming beams, that is, a beamforming unit. For example, the communication unit 701 may include a massive MIMO unit (MMU) for beamforming.

The communication unit 701 may transmit and receive signals. To achieve this, the communication unit 701 may include at least one transceiver. For example, the communication unit 701 may transmit a downlink signal. The downlink signal may include a synchronization signal, a reference signal (for example, a cell-specific reference signal (CRS), a demodulation (DM)-RS), system information (for example, a MIB, a SIB, remaining system information (RMSI), other system information (OSI)), a message (for example, a RRC message), control information, or downlink data. In addition, the communication unit 701 may receive an uplink signal. The uplink signal may include uplink control information (UCI), a random access-related signal (for example, a random access preamble (RAP)) (or message 1 (Msg 1), message 3 (Msg 3)), a reference signal (for example, a sounding reference signal (SRS), a DM-RS), or a buffer status report (BSR). For example, uplink control information may include at least one of a scheduling request (SR), ACK/NACK information of a hybrid acknowledge (HARQ) procedure, or channel state information (CSI). According to an embodiment, the communication unit 701 may perform beamforming. The communication unit 701 may apply a beamforming weight to a signal in order to give directionality according to a configuration of the controller 707 to a signal to transceiver. According to an embodiment, the communication unit 701 may generate a baseband signal according to a result of scheduling and a result of calculating transmit power. In addition, an RF unit in the communication unit 701 may transmit a generated signal through an antenna. According to an embodiment, for beamforming of the communication unit 701, explanations on FIGS. 2B to 2D may be applied to the communication unit 701 in the same or similar way.

The communication unit 701 may transmit and receive signals as described above. Accordingly, an entirety or a part of the communication unit 701 may be referred to as a "transmitter," a "receiver," or a "transceiver." In addition, in the following descriptions, transmitting and receiving via a wireless channel may be used as a meaning including processing by the communication unit 701 as described above.

The backhaul communication unit 703 provides an interface for communicating with other nodes in a network. That is, the backhaul communication unit 703 may convert a bit stream to be transmitted from the base station 110, 110 to another node, for example, another access node, another base station 110, 110, a higher node, a core network, or the like, into a physical signal, and may convert a physical signal transmitted from another node into a bit stream.

The storage unit 705 may store data such as a basic program for operations of the base station 110, an application program, configuration information, etc. The storage unit 705 may include a memory. The storage unit 705 may be configured by a volatile memory, a nonvolatile memory, or a combination of a volatile memory and a nonvolatile memory. In addition, the storage unit 705 provides stored data according to a request of the controller 707.

The controller 707 controls overall operations of the base station 110. For example, the controller 707 may transmit and receive signals via the communication unit 701 or the backhaul communication unit 703. In addition, the controller 707 may write and read out data on and from the storage unit 705. In addition, the controller 707 may perform functions of a protocol stack required by communication standards. To achieve this, the controller 707 may include at least one processor. According to various embodiments, the controller 707 may control the base station 110 to perform operations according to the above-described embodiments. According to an embodiment, the controller 707 may estimate an uplink channel.

In FIG. 7, the base station 110 is described as one entity, but the disclosure is not limited thereto as described above. The base station 110 according to various embodiments of the disclosure may be implemented to form an access network that has not only an integrated deployment (for example, eNB of LTE) but also a distributed deployment. According to embodiments of the disclosure, the base station 110 may be divided into a central unit (CU) and a digital unit (DU), and may be implemented for the CU to perform an upper layer function (for example, a packet data convergence protocol (PDCP), an RRC), and for the DU to perform a lower layer function (for example, medium access control (MAC), physical (PHY)).

The base station 110 having the distributed deployment as described above may further include a configuration for fronthaul interface communication. According to an embodiment, the base station 110 may perform functions for transceiving signals in a wired communication environment as a DU. The DU may include a wired interface to control direct connection between devices through a transmission medium (for example, a copper line, an optical fiber). For example, the DU may deliver an electrical signal to another device through a copper line, and may perform conversion between an electrical signal and an optical signal. The DU may be connected to a CU of a distributed deployment. However, this description is not interpreted as excluding a scenario in which the DU is connected with the CU through a wireless network. In addition, the DU may be additionally connected with a radio unit (RU). However, this description is not interpreted as excluding a wireless environment in which only a CU and a DU are configured.

According to an embodiment, the controller 707 may identify whether an index of a feedback signal received from the terminal 130 is included in a repeater index list, based on the received feedback signal. According to an embodiment, the controller 707 may generate control information based on an identified SSB index, and may transmit the control information. According to an embodiment, the controller 707 may transmit a downlink signal including data to transmit to the terminal 130. According to an embodiment, when an index of a received downlink signal is included in the repeater index list, the controller 707 may amplify the downlink signal and may apply a beamforming weight to the amplified downlink signal. When the index of the received downlink signal is not included in the repeater index list, the controller 707 may amplify the downlink signal and may transmit the amplified downlink signal, although this operation is not illustrated.

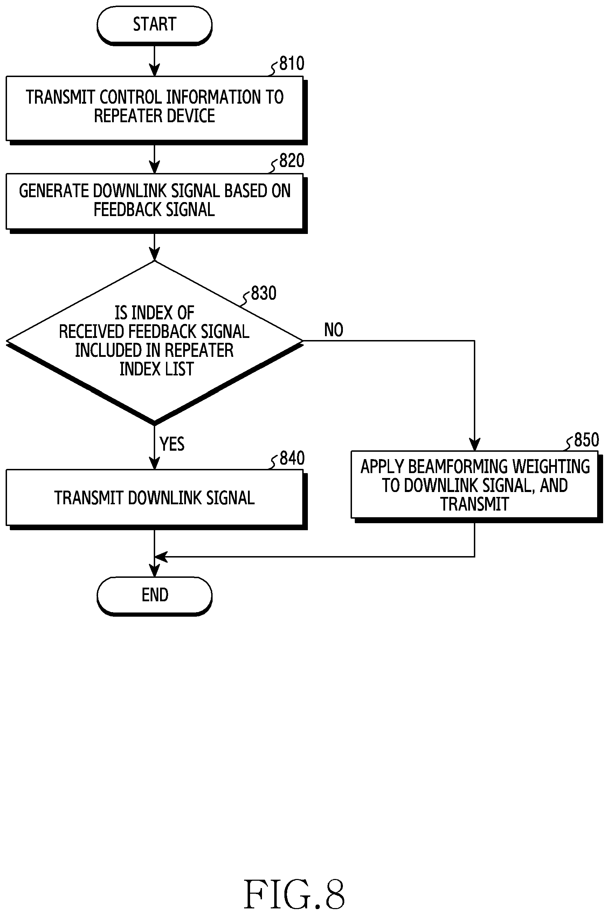

FIG. 8 illustrates an operation flow of the base station for amplifying based on beam information of the repeater device according to embodiments of the disclosure. According to an embodiment, the base station 110 or the repeater device 120 may identify the terminal 130 by performing beam sweeping although this operation is not illustrated in FIG. 8. The identified terminal 130 may identify a beam index based on beam sweeping. The terminal 130 may generate a feedback signal based on the identified beam index. The terminal 130 may transmit the generated feedback signal to the base station 110. In this case, the feedback signal that the terminal 130 transmits may be transmitted to the base station 110 via the repeater device 120. The base station 110 may identify whether an index of the received feedback signal is included in a repeater index list, based on the received feedback signal. The base station 110 may generate control information based on the identified beam information.

Referring to FIG. 8, in action 810, the base station 110 may transmit, to the terminal 130, control information including configuration information indicating the repeater index list. According to an embodiment, referring to FIG. 3, a SSB index list that is identified by the terminal 130 is illustrated. The repeater device 120 may identify whether to perform beamforming and may identify a usable beam, based on a SSB index list included in the control information received from the base station 110. The control information that the base station 110 transmits may include not only configuration information indicating a SSB index list but also at least one of information on uplink, downlink (UD) configuration, information on a SSB position, or information on a SSB transmission timing. The repeater device 120 may avoid interference with other cells by receiving the information on the UD configuration. However, the disclosure is not limited to the process in which the repeater device 120 receives control information, and according to an embodiment, configuration information indicating a SSB index list may be pre-set in the repeater device 120. In addition, SSB index lists of other combinations than the illustrated SSB index lists are possible. For example, although only B13 is illustrated as a beam index of the base station 110 of the SSB index list 321 for the repeater in FIG. 3, various types of narrow beams may be set as the beam index of the base station 110 of the SSB index list 321 for the repeater. An index of the repeater device 120 in the case of the index list other than the SSB index for the repeater is not illustrated in FIG. 3 (for example, the repeater device 120 does not transmit), but this is merely an example. In the disclosure, an index regarding a wide beam of the repeater device 120 may be set as a beam index. In FIG. 3, only the SSB index lists are illustrated, but this is merely an example. An index of at least one of a SSB or other signals other than the SSB (for example, a CSI-RS, a combination of a SSB and a CSI-RS) may be used as a beam index of the disclosure.

In action 820, the base station 110 may generate a downlink signal based on a feedback signal received from the terminal 130. The generated downlink signal may be a signal (for example, a PDCCH, a PDSCH) including data (for example, DCI) that the base station 110 intends to transmit to the terminal 130. The downlink signal that the base station 110 transmits may include the control information including the configuration information indicating the repeater index list, which is transmitted in action 810. According to an embodiment, the downlink signal that the base station 110 transmits may be generated based on status information of the repeater device 120 that the repeater device 120 transmits to the base station 110. The base station 110 may receive the status information of the repeater device 120 from the repeater device 120, and transmission of the status information may be performed before or after downlink transmission of the base station 110 or simultaneously. In this case, the transmitted status information may include the following information. The status information may include a repeater index, a capability of the repeater, and a beam of the base station 110 preferred by the repeater 120. When there are a plurality of repeater devices 120, the base station 110 may identify a specific repeater device 120 based on received repeater index information. The base station 110 may adaptively identify a beam weight based on information on the capability (for example, the number of beams) of the repeater received.

In action 830, the base station 110 may identify whether an index of the downlink signal to transmit is included in the repeater index list. Referring to FIG. 3, the repeater index list that is identified by the terminal 130 is illustrated. According to an embodiment, when the terminal 130 prefers a beam of the base station 110, for example, when the terminal 130 is positioned within the coverage 105 of the base station 110, the terminal 130 may identify at least one index (for example, SSB indexes 1 to 12) in the SSB index list 311 rather than the SSB index list 321 for the repeater. According to an embodiment, configuration information indicating a SSB index list may be pre-set in the repeater device 120. In addition, SSB index lists of other combinations than the illustrated SSB index lists are possible. In FIG. 3, an index of the repeater device 120 in the case of an index list other than the SSB index for the repeater is not illustrated (for example, the repeater device 120 does not transmit), but this is merely an example. An index related to a wide beam of the repeater device 120 may be set as a beam index of the disclosure. In FIG. 3, only the SSB index list is illustrated, but this is merely an example. An index of at least one of a SSB or other signals other than the SSB (for example, a CSI-RS, a combination of a SSB and a CSI-RS) may be used as a beam index of the disclosure. According to an embodiment, when the terminal 130 prefers a beam of the repeater device 120, for example, when the terminal 130 is positioned out of the coverage 105 of the base station 110 but is positioned within the coverage 107 of the repeater device 120, the terminal 130 may identify at least one index (for example, SSB indexes 13 to 24) in the SSB index list 321 for the repeater. According to an embodiment, configuration information indicating a SSB index list may be pre-set in the repeater device 120. In addition, SSB index lists of other combinations than the illustrated SSB index lists are possible. In FIG. 3, an index of the repeater device 120 in the case of an index list other than the SSB index for the repeater is not illustrated (for example, the repeater device 120 does not transmit), but this is merely an example. An index related to a wide beam of the repeater device 120 may be set as a beam index of the disclosure. For example, in FIG. 3, only B13 is illustrated as a beam index of the base station 110 in the SSB index list 321 for the repeater, but various kinds of narrow beams may be set as the beam index of the base station 110 in the SSB index list 321 for the repeater.

In action 840, the base station 110 may transmit the downlink signal when the index of the downlink signal to transmit is included in the repeater index list. When the terminal 130 prefers at least one beam among beams of the repeater device 120 (for example, when the terminal 130 is positioned out of the coverage 105 of the base station 110 and is positioned within the coverage 107 of the repeater device 120), the terminal 130 may identify at least one index in the SSB index list 321 for the repeater. The terminal 130 may transmit a feedback signal which is based on the identified index to the base station 110. The base station 110 may transmit control information generated based on the received feedback signal to the repeater device 120. The base station 110 may transmit the generated downlink signal to the repeater device 120. In the disclosure, when at least one index of the repeater SSB index list is identified, the base station 110 may transmit the downlink signal by using a wide beam (for example, SSB index B13), but this should not be considered as limiting. Even in this case, the base station 110 may apply a beamforming weight according to a type of an index.

In action 850, when the terminal 110 prefers at least one beam among beams of the base station 110 (for example, the terminal 130 is positioned within the coverage 105), the terminal 130 may identify at least one index in the SSB index list 311 rather than the SSB index list 321 for the repeater. The terminal 130 may transmit a feedback signal which is based on the identified index to the base station 110. Th base station 110 may acquire a SSB index of the beam identified by the terminal 130, based on the received feedback signal, and may identify that the identified SSB index is at least one index of the index list rather than the repeater index list. The base station 110 may identify a corresponding beam based on the identified SSB index. The base station 110 may apply a beamforming weight based on the identified SSB index. As a result of applying the beamforming weight, the base station 110 may transmit the downlink signal containing data to transmit to the terminal 130 by using a narrow beam. However, the disclosure is not limited to the base station 110 directly transmitting a downlink signal to the terminal 130. According to an embodiment, the base station 110 may transmit the downlink signal to the repeater device 120. However, in this case, the repeater device 120 may identify that the index of the received downlink signal is not included in the repeater index list, and may not perform beamforming. The repeater device 120 which does not perform beamforming may simply amplify the received downlink signal, and may transmit the downlink signal.

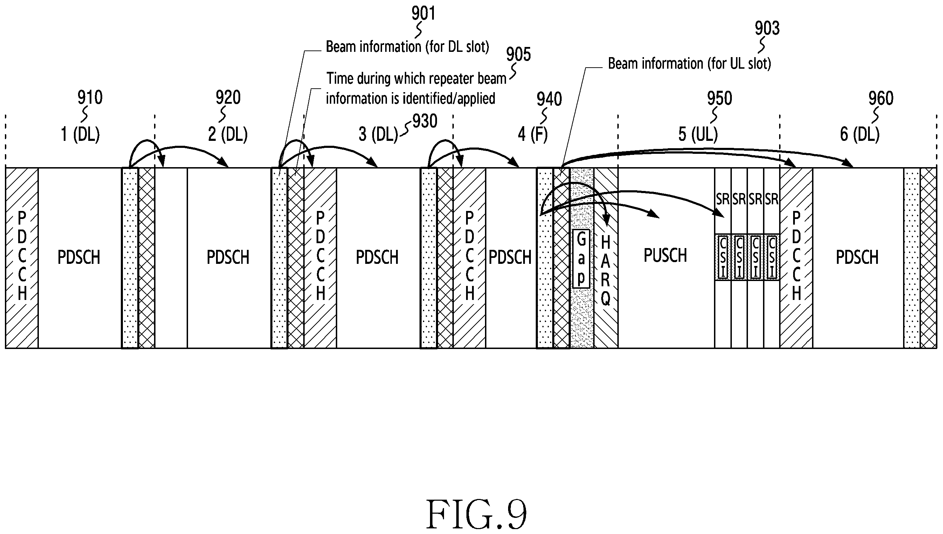

FIG. 9 illustrates an example of resource allocation for amplifying based on beam information according to embodiments of the disclosure. In FIG. 9, downlink and uplink transmission according to beam information of the base station in the repeater device 120 is illustrated.

Referring to FIG. 9, slot-based transmission in a TDD system may be assumed. A first slot 910 may be a downlink slot. A second slot 920 may be a downlink slot. A third slot 930 may be a downlink slot. A fourth slot 940 may be a flexible slot. A fifth slot 950 may be an uplink slot. A sixth slot 960 may be a downlink slot. According to NR standards, one slot may include 14 symbols.

A downlink slot may include a control channel (for example, a PDCCH), a data channel (for example, a PDSCH), or a reference signal (for example, a DMRS, a phase-tracking reference signal (PTRS), a CSI-RS, a SS/PBCH block). According to an embodiment, beam information may be transmitted on a downlink slot. Beam information may include a beam index list and beamforming information (for example, a beamforming weight) corresponding to a beam index. According to an embodiment, a predetermined processing time may be required between a transmission timing of beam information and a time at which the beam information is applied to reduce an overhead during slot-based transmission. For example, a gap 905 may be positioned between bean information 901 included in the second slot 920 and a PDCCH of the third slot 930 to which the beam information is applied. The gap 905 may be a time during which the repeater device identifies and applies beam information.

An uplink slot may include a control channel (for example, a PUCCH), a data channel (for example, a PUSCH), or a reference signal (for example, a SRS). For example, a PUCCH may include at least one of a scheduling request (SR), ACK/NACK information of a hybrid acknowledge (HARQ) procedure, or channel state information (CSI). According to an embodiment, beam information 903 which is transmitted in the downlink slot may include beamforming information for uplink transmission.

A flexible slot may include at least one of a downlink symbol or an uplink symbol. The flexible slot may be a downlink slot, an uplink slot, or a self-contained slot. According to an embodiment, as shown in FIG. 9, a self-contained slot including all of a downlink portion and an uplink portion in one slot may be used to transmit beam information.

The self-contained slot may include beam information for downlink transmission and beam information for uplink. According to an embodiment, the self-contained slot may include HARQ-ACK information. The beam information for uplink may include beamforming information for the HARQ-ACK information. In addition, the self-contained slot may include a gap between beam information and HARQ-ACK information as described above. According to an embodiment, the beam information for downlink may include beamforming information for downlink transmission (for example, a PDCCH, a PDSCH) of the next slot (for example, the sixth slot 960).

The repeater device 120 may receive control information (for example, UD configuration information, etc.) from the base station 110. The control information may include repeater beam information 901, 903. The repeater device 120 may apply a beamforming weight based on the control information. The repeater device 120 may identify a beam to apply to a downlink signal received from the base station 11, based on a signal including the received control information. Accordingly, the repeater device 120 may receive a signal 910, 920, 930, 940, 950, 960 including data that the base station 110 intends to transmit to the terminal 130 (that is, a signal to which a beam should be applied (for example, a PDCCH, a PDSCH, a PUSCH, a PUCCH, etc.)), after receiving the downlink signal 901, 903 including the control information. In FIG. 9, it is illustrated that the repeater device 120 receives the signal 901, 903 including control information right before the downlink signal 910, 920, 930, 940, 950, 960 including data that the base station 110 intends to transmit to the terminal 130. However, this should not be considered as limiting, and the signal 901, 903 including the control information may be transmitted on any portion of the previous slot of the downlink signal 910, 920, 930, 940, 950, 960 to which the beam should be applied. According to an embodiment, the repeater device 120 may acquire TDD configuration information based on the control information received from the base station 110. The repeater device 120 may avoid interference with other cells by adaptively adjusting slots of uplink and downlink signals, based on the acquired TDD configuration information.

According to various embodiments of the disclosure, there is provided a method performed by a repeater device in a wireless communication system, the method including: a process of receiving, from a base station, control information including configuration information indicating a repeater index list; a process of receiving a downlink signal from the base station; a process of identifying whether an index of the received downlink signal is included in the repeater index list; and a process of, when the index of the received downlink signal is included in the repeater index list, amplifying the downlink signal, and transmitting a repeater beamforming signal which is generated through a process of applying a beamforming weight to the amplified downlink signal; and a process of, when the index of the received downlink signal is not included in the repeater index list, amplifying the downlink signal and transmitting the amplified downlink signal.

According to an embodiment, the control information may further include at least one of information on an uplink downlink (UD) configuration or information on a synchronization signal block (SSB) position, and the process of transmitting the repeater beamforming signal may include: a process of identifying a downlink area based on the UD configuration or the SSB position; and a process of transmitting the repeater beamforming signal based on the identified downlink area.

According to an embodiment, the method performed by the repeater device in the wireless communication system may further include a process of transmitting status information of the repeater device to the base station, and the status information may include at least one of an index of the repeater device, a capability of the repeater device or a preferred base station of the repeater device.

According to an embodiment, the method performed by the repeater device in the wireless communication system may further include: a process of receiving a feedback signal generated based on beam sweeping from a terminal; and a process of transmitting the received feedback signal to the base station, and the feedback signal may be associated with an index of a preferred downlink signal.

According to an embodiment, the configuration information indicating the repeater index list may include information on at least one beam index of a synchronization signal block (SSB) index or a channel state information-reference signal (CSI-RS) index.

According to various embodiments of the disclosure, there is provided a method performed by a base station in a wireless communication system, the method including: a process of transmitting, to a repeater device, control information including configuration information indicating a repeater index list; a process of generating a downlink signal based on a feedback signal received from a terminal; a process of identifying whether an index of the received feedback signal is included in the repeater index list; and a process of, when the index of the received feedback signal is included in the repeater index list, transmitting the downlink signal to the repeater device; and a process of, when the index of the received feedback signal is not included in the repeater index list, transmitting a base station beamforming signal that is generated through a process of applying a beamforming weight to the downlink signal.

According to an embodiment, the control information may further include at least one of information on an uplink downlink (UD) configuration or information on a synchronization signal block (SSB) position.

According to an embodiment, the method performed by the base station in the wireless communication system may further include a process of receiving status information of the repeater device from the repeater device, and the status information may include at least one of an index of the repeater device, a capability of the repeater device or a preferred base station of the repeater device.

According to an embodiment, the method performed by the base station in the wireless communication system may further include a process of receiving, from the repeater device, the feedback signal generated from the terminal based on beam sweeping, and the feedback signal may be associated with an index of a preferred downlink signal.

According to an embodiment, the configuration information indicating the repeater index list may include information on at least one beam index of a synchronization signal block (SSB) index or a channel state information-reference signal (CSI-RS) index.

According to various embodiments, there is provided a repeater device in a wireless communication system, the repeater device including: at least one transceiver; and at least one processor, wherein the at least one processor is configured to: receive, from a base station, control information including configuration information indicating a repeater index list; receive a downlink signal from the base station; identify whether an index of the received downlink signal is included in the repeater index list; and, when the index of the received downlink signal is included in the repeater index list, amplify the downlink signal, and transmit a repeater beamforming signal which is generated through a process of applying a beamforming weight to the amplified downlink signal; and, when the index of the received downlink signal is not included in the repeater index list, amplify the downlink signal and transmit the amplified downlink signal.

According to an embodiment, the control information may further include at least one of information on a uplink downlink (UD) configuration or information on a synchronization signal block (SSB) position, and the at least one processor may be configured to identify a downlink area based on the UD configuration or the SSB position; and to transmit the repeater beamforming signal based on the identified downlink area.

According to an embodiment, the at least one processor may further be configured to transmit status information of the repeater device to the base station, and the status information may include at least one of an index of the repeater device, a capability of the repeater device or a preferred base station of the repeater device.

According to an embodiment, the at least one processor may further be configured to: receive a feedback signal generated based on beam sweeping from a terminal; and transmit the received feedback signal to the base station, and the feedback signal may be associated with an index of a preferred downlink signal.

According to an embodiment, the configuration information indicating the repeater index list may include information on at least one beam index of a synchronization signal block (SSB) index or a channel state information-reference signal (CSI-RS) index.

According to various embodiments of the disclosure, there is provided a base station device in a wireless communication system, the base station device including at least one transceiver and at least one processor, wherein the at least one processor is configured to: transmit, to a repeater device, control information including configuration information indicating a repeater index list; generate a downlink signal based on a feedback signal received from a terminal; identify whether an index of the received feedback signal is included in the repeater index list; and, when the index of the received feedback signal is included in the repeater index list, transmit the downlink signal to the repeater device; and when the index of the received feedback signal is not included in the repeater index list, transmit a base station beamforming signal that is generated through a process of applying a beamforming weight to the downlink signal.

According to an embodiment, the control information may further include at least one of information on an uplink downlink (UD) configuration or information on a synchronization signal block (SSB) position.

According to an embodiment, the at least one processor may further be configured to receive status information of the repeater device from the repeater device, and the status information may include at least one of an index of the repeater device, a capability of the repeater device or a preferred base station of the repeater device.

According to an embodiment, the at least one processor may further be configured to receive, from the repeater device, the feedback signal generated from the terminal based on beam sweeping, and the feedback signal may be associated with an index of a preferred downlink signal.

According to an embodiment, the configuration information indicating the repeater index list may include information on at least one beam index of a synchronization signal block (SSB) index or a channel state information-reference signal (CSI-RS) index.

In the disclosure, various indexes may be used to indicate channel quality. Channel quality may include at least one of reference signal received power (RSRP), reference signal received quality (RSRQ), beam reference signal received power (BRSRP), received signal strength indicator (RSRI), signal and noise ratio (SNR), signal to interference and noise ratio (SINR), carrier to interference and noise ratio (CINR), error vector magnitude (EVM), bit error rate (BER), block error rate (BEL). In addition, in addition to the above-described examples, other terms having the same technical meaning, or other metrics indicating channel quality may be used. In the disclosure, optimal channel quality may refer to high channel quality. High channel quality may mean that a size of an index related to a strength of a signal is great, and low channel quality may mean that the size of the index is low. Regarding an index related to an error rate (for example, EVM, BER, BLER), as a size of the index is smaller, relatively higher channel quality may be guaranteed.

Methods based on the claims or the embodiments disclosed in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description of the disclosure but by the appended claims and equivalents to the scope of the claims.

## Claims

1. A method performed by a repeater device in a wireless communication system, the method comprising:
receiving, from a base station, control information including configuration information indicating a repeater index list;
receiving, from the base station, a downlink signal;
identifying whether an index of the downlink signal is included in the repeater index list; and
when the index of the downlink signal is included in the repeater index list: amplifying the downlink signal; and transmitting a repeater beamforming signal which is generated by applying a beamforming weight to the amplified downlink signal; and
when the index of the downlink signal is not included in the repeater index list:
amplifying the downlink signal; and
transmitting the amplified downlink signal.

2. The method of claim 1,
wherein the control information further includes at least one of information on uplink downlink (UD) configuration or information on a synchronization signal block (SSB) position, and
wherein the transmitting of the repeater beamforming signal comprises: identifying a downlink area based on the UD configuration or the SSB position; and transmitting the repeater beamforming signal based on the identified downlink area.

3. The method of claim 1, further comprising:
transmitting, to the base station, status information of the repeater device,
wherein the status information includes at least one of an index of the repeater device, a capability of the repeater device, or a preferred base station of the repeater device.

4. The method of claim 1, further comprising:
receiving, from a user equipment (UE), a feedback signal generated based on beam sweeping; and
transmitting, to the base station, the received feedback signal,
wherein the feedback signal is associated with an index of a preferred downlink signal.

5. The method of claim 1, wherein the configuration information indicating the repeater index list includes information on at least one beam index of a synchronization signal block (SSB) index or a channel state information-reference signal (CSI-RS) index.

6. A method performed by a base station in a wireless communication system, the method comprising:
transmitting, to a repeater device, control information including configuration information indicating a repeater index list;
generating a downlink signal based on a feedback signal received from a user equipment (UE);
identifying whether an index of the received feedback signal is included in the repeater index list; and
when the index of the received feedback signal is included in the repeater index list, transmitting, to the repeater device, the downlink signal; and
when the index of the received feedback signal is not included in the repeater index list, transmitting a base station beamforming signal that is generated by applying a beamforming weight to the downlink signal.

7. The method of claim 6, wherein the control information further includes at least one of information on uplink downlink (UD) configuration or information on a synchronization signal block (SSB) position.

8. The method of claim 6, further comprising:
receiving, from the repeater device, status information of the repeater device,
wherein the status information includes at least one of an index of the repeater device, a capability of the repeater device, or a preferred base station of the repeater device.

9. The method of claim 6, further comprising:
receiving, from the repeater device, the feedback signal generated from the UE based on beam sweeping,
wherein the feedback signal is associated with an index of a preferred downlink signal.

10. The method of claim 6, wherein the configuration information indicating the repeater index list includes information on at least one beam index of a synchronization signal block (SSB) index or a channel state information-reference signal (CSI-RS) index.

11. A repeater device in a wireless communication system, the repeater device comprising:
at least one transceiver; and
at least one processor, and configured to:
receive, from a base station, control information including configuration information indicating a repeater index list;
receive, from the base station, a downlink signal;
identify whether an index of the downlink signal is included in the repeater index list; and
when the index of the received downlink signal is included in the repeater index list: amplify the downlink signal, and transmit a repeater beamforming signal which is generated by applying a beamforming weight to the amplified downlink signal; and
when the index of the received base station signal is not included in the repeater index list: amplify the downlink signal, and transmit the amplified downlink signal.

12. The repeater device of claim 11,
wherein the control information further includes at least one of information on uplink downlink (UD) configuration or information on a synchronization signal block (SSB) position, and
wherein the at least one processor is configured to: identify a downlink area based on the UD configuration or the SSB position, and transmit the repeater beamforming signal based on the identified downlink area.

13. The repeater device of claim 11, wherein the at least one processor is further configured to:
transmit, to the base station, status information of the repeater device,
wherein the status information includes at least one of an index of the repeater device, a capability of the repeater device or a preferred base station of the repeater device.

14. The repeater device of claim 11, wherein the at least one processor is further configured to:
receive, from a user equipment (UE), a feedback signal generated based on beam sweeping, and
transmit, to the base station, the received feedback signal,
wherein the feedback signal is associated with an index of a preferred downlink signal.

15. The repeater device of claim 11, wherein the configuration information indicating the repeater index list includes information on at least one beam index of a synchronization signal block (SSB) index or a channel state information-reference signal (CSI-RS) index.
